(19) Europäisches Patentamt / European Patent Office / Office européen des brevets

(11) **EP 3 950 789 A1**

(12) **EUROPEAN PATENT APPLICATION**
published in accordance with Art. 153(4) EPC

(43) Date of publication:
**09.02.2022 Bulletin 2022/06**

(21) Application number: **20785201.3**

(22) Date of filing: **27.03.2020**

(51) International Patent Classification (IPC):
**C08J 9/00** (2006.01)   **C08J 9/26** (2006.01)
**C08J 9/28** (2006.01)   **H01M 2/16** (2006.01)

(52) Cooperative Patent Classification (CPC):
**C08J 9/00; C08J 9/26; C08J 9/28; H01M 50/409;**
Y02E 60/10

(86) International application number:
**PCT/JP2020/014356**

(87) International publication number:
**WO 2020/203908 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2019 JP 2019068112**

(71) Applicant: **Toray Industries, Inc.**
**Tokyo, 103-8666 (JP)**

(72) Inventors:
- **ISHIHARA Takeshi**
  **Nasushiobara-shi, Tochigi 329-2763 (JP)**
- **TOYOTA Naoki**
  **Nasushiobara-shi, Tochigi 329-2763 (JP)**

- **TANAKA Hiroko**
  **Nasushiobara-shi, Tochigi 329-2763 (JP)**
- **NAKASHIMA Ryota**
  **Nasushiobara-shi, Tochigi 329-2763 (JP)**
- **FUJIWARA Satoshi**
  **Nasushiobara-shi, Tochigi 329-2763 (JP)**
- **YAMASAKI Takashi**
  **Nasushiobara-shi, Tochigi 329-2763 (JP)**
- **OHKURA Masatoshi**
  **Otsu-shi, Shiga 520-8558 (JP)**

(74) Representative: **Mewburn Ellis LLP**
**Aurora Building**
**Counterslip**
**Bristol BS1 6BX (GB)**

(54) **MICROPOROUS POLYOLEFIN FILM, SEPARATOR FOR BATTERY, AND SECONDARY BATTERY**

(57)     The present invention addresses the problem of providing a microporous polyolefin film which makes it possible to obtain a battery having excellent characteristics at low temperatures (e.g., about 0°C). The present invention relates to a microporous polyolefin film which satisfies the relationship (average number of pores)$\geq$(160-2.3$\times$10$^{-3}\times$toughness).

EP 3 950 789 A1

# EP 3 950 789 A1

## Description

### TECHNICAL FIELD

The present invention relates to a polyolefin microporous membrane, a battery separator, and a secondary battery.

### BACKGROUND ART

The thermoplastic resin microporous membranes have been widely used as material separation membranes, permselective membranes, isolation membranes, and the like. Specific applications of the microporous membranes include battery separators used for lithium ion secondary batteries, nickel-hydrogen batteries, nickel-cadmium batteries, and polymer batteries, separators for electric double layer capacitors, various filters such as reverse osmosis filtration membranes, ultrafiltration membranes, and microfiltration membranes, moisture-permeable and waterproof clothing, medical materials, supports for fuel cells and the like.

In particular, as a separator for a lithium ion secondary battery, a microporous polyethylene membrane is widely adopted. As a feature thereof, in addition to excellent mechanical strength that significantly contributes to safety and productivity of the battery, it is possible to provide an ion permeability through the electrolytic solution that has infiltrated into the micropores, while ensuring electrical insulation. Further, the microporous polyethylene membrane has a pore blocking function that suppresses an excessive temperature rise by automatically blocking the permeation of ions at about 120°C to 150°C during an abnormal reaction at the outside or the inside of the battery.

Lithium ion batteries have been widely used in a field of use in which a large scale and a large capacity are required, such as storage batteries for electric power tools, automobiles, and bicycles, and large power storage equipments, in addition to a field of use in so-called small consumer applications such as conventional mobile phones and PC batteries. In addition, when a large-capacity battery is used, a battery capable of discharging or taking in a large amount of electric power in a short time, that is, a battery having excellent charging/discharging characteristics is required. Such a battery can complete charging in a short period of time due to excellent charging/discharging characteristics, and can satisfy requirements in the field of electric power tools and drones that use a large amount of energy in a short period of time.

As one means for achieving a high battery capacity, it has been studied to reduce the thickness of the separator and use more electrode materials. Conventionally, a separator having a thickness of 15 $\mu$m or more has been used especially for vehicles. In some fields, a separator having such a thickness is used.

However, the capacity of the battery is increased, and the opportunity to use a separator having a thickness of 15 $\mu$m or less is increased, and it is expected that reduction of the thickness of the separator further progresses in the future. Even in this case, safety and battery productivity equivalent to those in the case of using a separator having a thickness of 15 $\mu$m or more are required.

When the thickness of the separator is reduced, strength (puncture strength and tensile strength) generally decreases, and therefore, there is an increasing risk of occurrence of problems such as (1a) a short circuit due to a foreign substance derived from an electrode is likely to occur, (1b) when the separator is used as a member for a battery, it is difficult to follow the expansion and shrinkage of the electrode due to charging/discharging, and (1c) when the battery is subjected to an impact from the outside, there is a high possibility that the separator is deformed and, in some cases, broken. In particular, a high capacity battery is required to have higher safety than ever before, and a higher level of strength than ever before is required for (1c).

In order to obtain a separator excellent in charging/discharging characteristics, the following ways are typically considered: (2a) increasing the porosity, (2b) increasing the pore diameter, (2c) reducing the membrane thickness, (2d) decreasing the bendability of the pores, that is, employing the "straight" pore structure that does not hinder the movement of ions, or (2e) increasing the number of pores.

It has been found that in both (2a) and (2c), there is a high possibility that the strength will decrease, in (2b) and (2d), lithium ions form a needle-like structure on the electrode surface with charging/discharging of the battery, and dendrites are likely to be generated, causing the drawback of shortening the life of the battery.

In addition, as battery characteristics, it is required to improve the characteristics under conditions in which the operating temperature is equal to or lower than room temperature for large applications, especially in-vehicle applications, as compared with small-sized consumer applications, for example, for PCs or smartphones.

In order to meet such demands, the development of the separators has been advanced so far (Patent Literatures 1 to 5).

As a separator that achieves both rate characteristics and safety, there has been proposed a separator using a multilayer porous membrane having a porous membrane having a predetermined average pore diameter, tortuosity and number of pores, and a porous layer (Patent Literature 1). Patent Literature 1 discloses a separator having a higher battery capacity at a higher rate than that of conventional products, excellent rate characteristics and high safety in a safety test (nail penetration test), as compared in terms of a discharge capacity at a high rate (a ratio of discharge capacity at 10C to a discharge capacity at 1C).

In addition, by controlling the number of pores and the surface roughness of the separator, there is disclosed a separator in which the capacity retention rate after the charge and discharge cycle test of the battery is high and high safety is exhibited in the safety test by the nail penetration test (Patent Literature 2).

As a method for achieving both safety and battery characteristics, a measure to add a low-melting point polyethylene has been proposed (Patent Literature 3). In Patent Literature 3, there has been made a proposal to ensure safety by maintaining a difference between a fuse temperature (expressed as a shutdown temperature in the present application) and a short-circuit temperature (expressed as a meltdown temperature in the present application) while maintaining a high capacity retention rate after the cycle test by controlling the hole diameter, the bending rate, and the number of pores.

In addition, by using a separator defined using a pore size calculated by a different method, a separator having excellent high rate characteristics (a comparison of a discharge capacity ratio under different measurement conditions of a current amount of 10 times), a high discharge capacity after a cycle test, and excellent cycle characteristics is disclosed (Patent Literature 4). Patent Literature 4 describes that the reason why the above-mentioned characteristics can be obtained is because the wettability and the holding property of the electrolytic solution are improved by controlling the pore diameter.

In addition, a separator having less deterioration after a charge/discharge cycle test has been proposed by controlling the characteristics of the pore wall by treating the high molecular weight polyethylene with a petroleum resin and adjusting the ion permeation barrier energy (Patent Literature 5).

CITATION LIST

PATENT LITERATURE

    Patent Literature 1: JP-A-2017-140840
    Patent Literature 2: JP-A-2015-159126
    Patent Literature 3: JP-A-2003-231772
    Patent Literature 4: JP-A-2012-048987
    Patent Literature 5: JP-A-2018-147885

SUMMARY OF INVENTION

TECHNICAL PROBLEM

However, the technique disclosed in Patent Literature 1 does not consider the tensile strength and the tensile elongation that greatly affect the characteristics of the separator in the case of subjecting to an impact. In addition, since the separator of Patent Literature 1 has a high porosity and a large pore diameter, it is expected that the voltage endurance is insufficient when the separator is a thin film.

Although it is disclosed that the battery life is extended by controlling the number of pores in Patent Literature 2, the battery capacity at a high rate at which a load is applied to the battery is not considered.

The same applies to Patent Literature 3, and the technique disclosed in Patent Literature 3 aims to improve the retention rate of the battery capacity after the cycle test, does not mention the characteristics at a high rate under a high load condition, and does not disclose a technique related to impact safety.

Patent Literature 4 discloses that the electrolyte injection property has a great influence on the battery characteristics at a high rate, and thus the pore diameter is controlled to maintain a specific relationship, but does not refer to the strength characteristics for ensuring safety. In addition, Patent Literature 4 discloses only the behavior at room temperature for the behavior relating to the high rate, and does not conceive of the problem at low temperature.

Patent Literature 5 discloses a technique for improving battery performance after a cycle test by focusing on the resistance of a separator and controlling the temperature dependence within a specific range. However, Patent Literature 5 does not disclose the characteristics of the separator at a high rate, and the invention described in Patent Literature 5 is not a technical invention in consideration of compatibility with safety.

As described above, in order to cope with the increase in size of the lithium ion battery, there is room for improvement in order to achieve both safety and high-speed charging/discharging characteristics, particularly improvement of characteristics at low temperatures, by using a thin separator.

The present invention has been made in view of the above circumstances, and an object of the present invention is to provide a polyolefin microporous membrane having excellent battery characteristics at a low temperature (for example, about 0°C).

SOLUTION TO PROBLEM

As a result of intensive studies to solve the above problems, the present inventors have found that the problems can be achieved by the following configurations, and have reached the present invention. That is, the present invention is as follows.

[1] A polyolefin microporous membrane, in which a relationship represented by the following formula (5) is satisfied between an average number of pores ($/\mu m^3$) calculated by the following formula (1) and a toughness (MPa%) calculated by the following formula (4):

$$\text{Average number of pores} = 4 \times (\varepsilon/100)/(\pi \times d^2 \times \tau \times L) \quad \text{Formula (1)}$$

[$\varepsilon$: porosity (%), d: average pore diameter ($\mu$m), $\tau$: tortuosity calculated by the following formula (2), L: membrane thickness ($\mu$m)]

$$\text{Tortuosity } \tau = (d \times (\varepsilon/100) \times 500/(3 \times L \times 101300 \times R_{gas}))^{0.5} \quad \text{Formula (2)}$$

[d: average pore diameter ($\mu$m), L: membrane thickness ($\mu$m), $R_{gas}$: gas permeation constant ($m^3/(m^2 \cdot sec \cdot Pa)$) calculated by the following formula (3)]

$$\text{Gas permeation constant } R_{gas} = 0.0001/(G \times (6.424 \times 10^{-4}) \times (0.01276 \times 101325)) \quad \text{Formula (3)}$$

[G: Air permeability ($sec/100cm^3$)]

$$\text{Toughness} = \text{Tensile strength (MPa) in MD direction} \times \text{Tensile elongation (\%) in MD direction} + \text{Tensile strength (MPa) in TD direction} \times \text{Tensile elongation (\%) in TD direction} \quad \text{Formula (4)}$$

$$\text{Average number of pores} \geq 160 - 2.3 \times 10^{-3} \times \text{Toughness} \quad \text{Formula (5)}.$$

[2] The polyolefin microporous membrane according to [1], in which the average pore number is 60/$\mu m^3$ or more, and the toughness is 40,000 MPa% or more.

[3] The polyolefin microporous membrane according to [1] or [2], in which a maximum shrinkage calculated by the following formula (6) is 60% or less:

$$\text{Maximum shrinkage} = (HSMD + HSTD) \quad \text{Formula (6)}$$

[HSMD: maximum shrinkage (%) in MD direction measured by thermomechanical analysis, HSTD: maximum shrinkage (%) in TD direction measured by thermomechanical analysis].

[4] The polyolefin microporous membrane according to any one of [1] to [3], in which a puncture strength in terms of a membrane thickness of 10 $\mu$m is 3500 mN or more.

[5] A battery separator, using the polyolefin microporous membrane according to any one of [1] to [4].

[6] A secondary battery, using the battery separator according to [5].

ADVANTAGEOUS EFFECTS OF INVENTION

The polyolefin microporous membrane of the present invention has excellent battery characteristics at a low temperature (for example, about 0°C).

BRIEF DESCRIPTION OF DRAWINGS

FIG. 1 is a schematic diagram showing a tendency of a capacity retention rate at each rate with respect to the rate.
FIG. 2 is a graph showing a relationship between a ratio of cross rate/m1 and a ratio of m2/m1 measured at 35°C in Examples and Comparative Examples.
FIG. 3 is a graph showing a relationship between a coefficient m2 of a secondary degradation region at 0°C and a value of the toughness $\times$ the average number of pores.
FIG. 4 is a graph showing a relationship between a ratio of m2/m1 at 0°C and a value of the toughness $\times$ the average number of pores.
FIG. 5 is a graph showing the relationship between -A (m1) and the average number of pores.
FIG. 6 is a graph showing the relationship between the temperature responsiveness (B (n1)) and the average number of pores.
FIG. 7 is a graph showing a relationship between -A (m2) and a toughness;
FIG. 8 is a graph showing a relationship between B (n2) and a toughness.

DESCRIPTION OF EMBODIMENTS

As a result of intensive studies by the present inventors in order to obtain a polyolefin microporous membrane excellent in battery productivity and safety, the present inventors have found that a polyolefin microporous membrane having a high average number of pores and a toughness can be obtained with a polyolefin microporous membrane having a small capacity decrease during high-speed charging/discharging by controlling the stretching conditions under certain conditions.
Hereinafter, the present invention will be described in detail.

(Raw Material)

(Resin Type)

The polyolefin microporous membrane of the present invention contains a polyolefin resin.
The polyolefin resin is preferably polyethylene or polypropylene. The polyolefin resin may be a single substance or a mixture of two or more different polyolefin resins. Examples of the mixture of two or more different polyolefin resins include, for example, a mixture of polyolefin resins selected from polyethylene, polypropylene, polybutene, and poly(4-methyl-1-pentene). The mixture of two or more different polyolefin resins is preferably a mixture of polyethylene and another polyolefin resin. The polyolefin resin is not limited to a homopolymer and may be a copolymer of different olefins.
Among such polyolefin resins, polyethylene is particularly preferable from the viewpoint of excellent pore blocking performance.
The melting point (softening point) of polyethylene is preferably from 70°C to 150°C from the viewpoint of pore blocking performance.
Hereinafter, a detail description is made by taking polyethylene as an example of the polyolefin resin used in the present invention.
Examples of the polyethylene include ultrahigh molecular weight polyethylene, high-density polyethylene, medium-density polyethylene, and low-density polyethylene. Examples of the low-density polyethylene include branched low-density polyethylene and linear low-density polyethylene.
The polymerization catalyst of polyethylene is not particularly limited, and a Ziegler-Natta catalyst, a Phillips catalyst, a metallocene catalyst, or the like can be used.
These polyethylenes may be not only ethylene homopolymers but also copolymers containing a small amount of other $\alpha$-olefins. Examples of the $\alpha$-olefins other than ethylene include propylene, 1-butene, 1-pentene, 1-hexene, 4-methyl-1-pentene, 1-octene, (meth)acrylic acid, (meth)acrylic acid esters, styrene, or the like. In the present invention, (meth)acryl means acryl or methacryl.
As desired, the polyethylene may be a polyethylene having a terminal unsaturated group. The polyethylene may have a terminal unsaturated group amount of 0.20 or more per 10,000 carbon atoms, for example 5.0 or more per 10,000 carbon atoms, preferably 10.0 or more per 10,000 carbon atoms. The amount of the terminal unsaturated groups can be measured, for example, according to the procedure described in International Publication No. 1997/023554. In another embodiment, the polyethylene may have a terminal unsaturated group amount of less than 0.20 per 10,000 carbon atoms.

The polyethylene may be a single substance or a polyethylene mixture composed of two or more kinds of polyethylene.

[Single Polyethylene]

(Ultrahigh Molecular Weight Polyethylene)

When a single substance is used as the polyethylene, ultrahigh molecular weight polyethylene can be used alone as an example. In this case, in the ultrahigh molecular weight polyethylene, the weight average molecular weight is preferably $5.0 \times 10^5$ or more and $1.0 \times 10^7$ or less. In terms of the lower limit, the weight average molecular weight is more preferably $1.0 \times 10^6$ or more, still more preferably $1.1 \times 10^6$ or more, still more preferably $1.2 \times 10^6$ or more, particularly preferably $1.5 \times 10^6$ or more, and most preferably $2.0 \times 10^6$ or more. In terms of the upper limit, the weight average molecular weight is more preferably $8.0 \times 10^6$ or less, still more preferably $6.0 \times 10^6$ or less, yet still more preferably $5.0 \times 10^6$ or less, and most preferably $4.0 \times 10^6$ or less.

When the weight average molecular weight is $5.0 \times 10^5$ or more, a high puncture strength can be achieved. Furthermore, when the weight average molecular weight is $1.0 \times 10^6$ or more, the entanglement density of the amorphous region increases, which is preferable for achieving both the tensile strength and the tensile elongation.

In order to exhibit the structural uniformity of the microporous film, in the ultrahigh molecular weight polyethylene, it is preferable that the amount (mass%) of the ultrahigh molecular weight component (hereinafter referred to as "f"; when the unit of f is simply described as "%", the "%" means mass%.) having a molecular weight of 2.33 million or more exceeds 5 mass% (f > 5 mass%). f is more preferably 8 mass% or more, still more preferably 10 mass% or more, and most preferably 12 mass% or more. In terms of the upper limit, f is preferably 100 mass% or less, more preferably 80 mass% or less, still more preferably 60 mass% or less, and most preferably 50 mass% or less.

The molecular weight distribution (weight average molecular weight (Mw)/number average molecular weight (Mn)) of the ultrahigh molecular weight polyethylene is preferably within the range of 3.0 to 100 from the viewpoint of mechanical strength. In terms of the lower limit, the molecular weight distribution is more preferably 4.0 or more, still more preferably 5.0 or more, yet still more preferably 6.0 or more, and most preferably 8.0 or more. In terms of the upper limit, the molecular weight distribution is more preferably 80 or less, still more preferably 50 or less, still more preferably 30 or less, and most preferably 17 or less.

In the case where the ultrahigh molecular weight polyethylene is used alone, when the molecular weight distribution is less than 3.0, the processability is poor, and when the molecular weight distribution exceeds 100, there is a high possibility that a defect or the like is likely to occur during processing due to an increase in the low molecular weight component.

The melting point (Tm) of the ultrahigh molecular weight polyethylene is preferably 122°C or more and 140°C or less. When the melting point of the ultrahigh molecular weight polyethylene is 122°C or more, a polyolefin microporous membrane having good permeability tends to be obtained. In addition, by setting the melting point of the ultrahigh molecular weight polyethylene to 140°C or less, it is possible to obtain a polyolefin microporous membrane having excellent shutdown characteristics in which pores of the polyolefin microporous membrane are blocked when an abnormal state occurs when the battery is used.

In terms of the lower limit, the melting point of the ultrahigh molecular weight polyethylene is more preferably 124°C or more, still more preferably 126°C or more. In terms of the upper limit, the melting point of the ultrahigh molecular weight polyethylene is more preferably 138°C or less, still more preferably 136°C or less, more preferably 134°C or less, and most preferably 133°C or less.

The melting point is measured according to JIS K7122: 2012.

That is, a measurement sample (a formed article having a thickness of 0.5 mm melted and pressed by 210°C) is put into a sample holder of a differential scanning calorimeter (Pyris Diamond DSC manufactured by Perkin Elmer Co., Ltd.) at an ambient temperature, heated at 230°C for 3 minutes in a nitrogen atmosphere, cooled to 30°C at a rate of 10°C/min, held at 30°C for 3 minutes, and heated to 230°C at a rate of 10°C/min.

(Other Polyethylenes)

When a single substance is used as the polyethylene, polyethylene having a lower molecular weight may be used alone in addition to the ultrahigh molecular weight polyethylene. Examples of the polyethylene having a lower molecular weight include high-density polyethylene (HPDE), medium-density polyethylene, branched low-density polyethylene, and linear low-density polyethylene, and the use of polyethylene having a lower molecular weight alone refers to the use of one of these components alone. As the polyethylene having a lower molecular weight, a high-density polyethylene can be used as desired. When polyethylene having a lower molecular weight is used alone, the melting point (Tm) of the polyethylene is preferably 131.0°C or more, more preferably 131.0°C to 135°C. The weight average molecular weight is preferably less than $1.0 \times 10^6$, more preferably $1.0 \times 10^5$ or more and less than $1.0 \times 10^6$, and still more preferably $2 \times 10^5$ to $9.5 \times 10^5$. The Tm is measured by the same method as the ultrahigh molecular weight polyethylene.

When polyethylene having a lower molecular weight is used alone, the polyethylene has a molecular weight distribution (MWD) of $1.0 \times 10^2$ or less, for example, 50.0 or less, preferably 3.0 to 20.0, as desired.

[Polyethylene Mixture]

On the other hand, a polyethylene mixture can also be used as the polyethylene.

As the polyethylene mixture, a mixture of two or more kinds of ultrahigh molecular weight polyethylenes having different weight average molecular weights (Mw), a mixture of two or more kinds of high-density polyethylenes having different weight average molecular weights (Mw), a mixture of two or more kinds of medium-density polyethylenes having different weight average molecular weights (Mw), or a mixture of two or more kinds of low-density polyethylenes having different weight average molecular weights (Mw) may be used, or a mixture of two or more kinds of polyethylenes selected from the group consisting of ultrahigh molecular weight polyethylenes, high-density polyethylenes, medium-density polyethylenes, and low-density polyethylenes may be used. As the polyethylene mixture, a polyethylene mixture containing ultrahigh molecular weight polyethylene is preferable. For example, examples of the polyethylene mixture of a preferred embodiment include a mixture of ultrahigh molecular weight polyethylene having an Mw of $1 \times 10^6$ or more and polyethylene having an Mw of $1 \times 10^4$ or more and less than $7 \times 10^5$.

(Ultrahigh Molecular Weight Polyethylene)

When the ultrahigh molecular weight polyethylene is used for a polyethylene mixture, the weight average molecular weight of the ultrahigh molecular weight polyethylene is preferably $5.0 \times 10^5$ or more and $1.0 \times 10^7$ or less. In terms of the lower limit, the weight average molecular weight is more preferably $1.0 \times 10^6$ or more, still more preferably $1.1 \times 10^6$ or more, still more preferably $1.2 \times 10^6$ or more, particularly preferably $1.5 \times 10^6$ or more, and most preferably $2.0 \times 10^6$ or more. In terms of the upper limit, the weight average molecular weight is more preferably $8.0 \times 10^6$ or less, still more preferably $6.0 \times 10^6$ or less, yet still more preferably $5.0 \times 10^6$ or less, and most preferably $4.0 \times 10^6$ or less.

When the weight average molecular weight of the ultrahigh molecular weight polyethylene is $5.0 \times 10^5$ or more, a high puncture strength can be achieved. Furthermore, when the weight average molecular weight is $1.0 \times 10^6$ or more, the entanglement density of the amorphous region increases, which is preferable for achieving both the tensile strength and the tensile elongation.

In order to exhibit the structural uniformity of the polyolefin microporous membrane, it is preferable that the amount (f) (mass%) of the ultrahigh molecular weight component of the ultrahigh molecular weight polyethylene used in the polyethylene mixture exceeds 5 mass%. f is preferably 8 mass% or more, more preferably 10 mass% or more, still more preferably 12 mass% or more. In terms of the upper limit, f is preferably 100 mass% or less, more preferably 80 mass% or less, still more preferably 60 mass% or less, and most preferably 50 mass% or less.

The molecular weight distribution (weight average molecular weight (Mw)/number average molecular weight (Mn)) of the ultrahigh molecular weight polyethylene used in the polyethylene mixture is preferably in the range of 3.0 to 100 from the viewpoint of mechanical strength. In terms of the lower limit, the molecular weight distribution is preferably 4.0 or more, more preferably 5.0 or more, still more preferably 6.0 or more, and most preferably 8.0 or more. In terms of the upper limit, the molecular weight distribution is preferably 80 or less, more preferably 50 or less, still more preferably 20 or less, and most preferably 17 or less.

The molecular weight distribution of the ultrahigh molecular weight polyethylene used in the polyethylene mixture varies depending on the components to be mixed and the mixing ratio. When the mixing ratio is 3.0 or more, the processability is likely to be improved, and when the molecular weight distribution is 100 or less, the low molecular weight component is unlikely to increase, so that it is easy to suppress the occurrence of defects during processing.

The melting point (Tm) of the ultrahigh molecular weight polyethylene used in the polyethylene mixture is preferably 122°C or more and 140°C or less. When the melting point of the ultrahigh molecular weight polyethylene is 122°C or more, good permeability can be obtained. In addition, by setting the melting point of the ultrahigh molecular weight polyethylene to 140°C or less, it is possible to obtain a polyolefin microporous membrane having excellent shutdown characteristics in which pores of the polyolefin microporous membrane are blocked when an abnormal state occurs when the battery is used.

In terms of the lower limit, the melting point of the ultrahigh molecular weight polyethylene used in the polyethylene mixture is more preferably 124°C or more, still more preferably 126°C or more. In terms of the upper limit, the melting point of the ultrahigh molecular weight polyethylene is more preferably 138°C or less, still more preferably 136°C or less, more preferably 134°C or less, and most preferably 133°C or less.

The melting point is measured according to JIS K7122: 2012.

That is, a measurement sample (a formed article having a thickness of 0.5 mm melted and pressed by 210°C) is put into a sample holder of a differential scanning calorimeter (Pyris Diamond DSC manufactured by Perkin Elmer Co., Ltd.) at a ambient temperature, heated at 230°C for 3 minutes in a nitrogen atmosphere, cooled to 30°C at a rate of 10°C/min, held at 30°C for 3 minutes, and heated to 230°C at a rate of 10°C/min.

(Other Polyethylenes)

In addition to the ultrahigh molecular weight polyethylene, polyethylene having a lower molecular weight may be used for the polyethylene mixture. Examples of the polyethylene having a lower molecular weight include high-density polyethylene (HPDE), medium-density polyethylene, branched low-density polyethylene, and linear low-density polyethylene. As the polyethylene having a lower molecular weight, a high-density polyethylene can be used as desired. The polyethylene mixture is preferably a polyethylene mixture containing ultrahigh molecular weight polyethylene, but a polyethylene mixture not containing ultrahigh molecular weight polyethylene and consisting of polyethylene having a lower molecular weight can also be used.

The polyethylene having a lower molecular weight preferably has a melting point (Tm) of 131.0°C or more, and more preferably 131.0°C to 135°C. The Tm is measured by the same method as the ultrahigh molecular weight polyethylene.

The polyethylene having a lower molecular weight has a molecular weight distribution (MWD) of $1.0 \times 10^2$ or less, for example, 50.0 or less, more preferably 3.0 to 20.0, as desired.

The weight average molecular weight of polyethylene having a lower molecular weight is preferably less than $1.0 \times 10^6$, more preferably $1.0 \times 10^4$ or more and less than $1.0 \times 10^6$, still more preferably $1.0 \times 10^5$ or more and less than $1.0 \times 10^6$, and particularly preferably $2 \times 10^5$ to $9.5 \times 10^5$, when the polyethylene mixture contains ultrahigh molecular weight polyethylene. When the polyethylene mixture does not contain ultrahigh molecular weight polyethylene, the weight average molecular weight of polyethylene having a lower molecular weight is preferably less than $1.0 \times 10^6$, more preferably $1.0 \times 10^5$ or more and less than $1.0 \times 10^6$, and still more preferably $2 \times 10^5$ to $9.5 \times 10^5$.

(Polyethylene Mixture)

The content of the ultrahigh molecular weight polyethylene in the polyethylene mixture is preferably from 1 mass% to 99 mass% from the viewpoint of tensile strength. The content of the ultrahigh molecular weight polyethylene in the polyethylene mixture is more preferably from 5 mass% to 99 mass%, still more preferably from 20 mass% to 99 mass%. When the ultrahigh molecular weight polyethylene is present in an amount of 1 mass% or more in the polyethylene mixture, a high puncture strength can be obtained. When the content of the ultrahigh molecular weight polyethylene in the polyethylene mixture is 99 mass% or less, the productivity is improved. In addition, it is most preferable that the ultrahigh molecular weight polyethylene is present in an amount of 20 mass% or more in the polyethylene mixture, so that it is possible to achieve both high tensile strength and tensile elongation at the same time.

The amount of polyethylene other than the ultrahigh molecular weight polyethylene in the polyethylene mixture may be 99.0 mass% or less as desired, such as 5.0 mass% to 99.0 mass%, 30.0 mass% to 95.0 mass%, or 40.0 mass% to 85.0 mass%, based on the mass of the layer in which the polyethylene is present.

The molecular weight distribution (weight average molecular weight (Mw)/number average molecular weight (Mn)) of the polyethylene mixture is preferably in the range of 3.0 to 200 from the viewpoint of mechanical strength. In terms of the lower limit, the molecular weight distribution is more preferably 4.0 or more, still more preferably 5.0 or more, yet still more preferably 6.0 or more, and most preferably 8.0 or more. In terms of the upper limit, the molecular weight distribution is more preferably 180 or less, still more preferably 150 or less, still more preferably 120 or less, and most preferably 100 or less.

The polyethylene mixture preferably contains 2 mass% or more of an ultrahigh molecular weight polyethylene component having a weight average molecular weight of 1 million or more, and a polyethylene mixture containing 5 mass% or more of the ultrahigh molecular weight polyethylene component is more preferable. More preferably, the polyethylene mixture contains 10 mass% or more of the ultrahigh molecular weight polyethylene component. When the ultrahigh molecular weight polyethylene component is contained, high tensile elongation and low thermal shrinkage can be achieved while achieving high puncture strength and tensile strength, and battery productivity and high safety can be achieved.

In addition, in the polyolefin microporous membrane after film formation which will be described later, it is preferable that the amount (f) of the ultrahigh molecular weight component having a molecular weight of 2.33 million or more is 5 mass% or more in order to achieve both output characteristics at low temperature and battery safety. The amount of the component is more preferably 10 mass% or more, still more preferably 15 mass% or more, particularly preferably 18 mass% or more, and most preferably 20 mass% or more. When the ultrahigh molecular weight polyethylene component is contained in the above preferable amount in the polyolefin microporous membrane after the film formation, output characteristics at a low temperature are particularly excellent, a high capacity retention rate can be ensured even at a high rate, which contributes to achieving a long operation time of the battery. In addition, since the toughness showing high impact resistance can also be achieved along with the low thermal shrinkage, it is also possible to achieve high safety of the battery. f in the polyolefin microporous membrane after film formation can be controlled by adjusting f of polyethylene to be used. In order to control f, a method of preventing a decrease in molecular weight during production of a polyolefin microporous membrane, such as processing a raw material in a nitrogen atmosphere, may be combined.

(Solvent Type)

The polyolefin microporous membrane of the present invention may contain a solvent (diluent).

The diluent is not particularly limited as long as the diluent is a substance that can be mixed with the polyolefin resin or a substance that can dissolve the polyolefin resin. As the diluent, a liquid one may be used, or a solvent that can be mixed with polyolefin in a melt-kneaded state with a polyolefin resin but remains in a solid state at room temperature may be mixed with the diluent.

Examples of such a solid diluent include stearyl alcohol, ceryl alcohol, and paraffin wax.

Examples of the liquid diluent include aliphatic hydrocarbons, cyclic aliphatic hydrocarbons or aromatic hydrocarbons such as nonane, decane, decalin, paraxylene, undecane, dodecane, and liquid paraffin, mineral oil fractions whose boiling points correspond to (same or similar) the boiling points of these aliphatic hydrocarbons, cyclic aliphatic hydrocarbons or aromatic hydrocarbons, and phthalates that are liquid at the room temperature, such as dibutyl phthalate and dioctyl phthalate, vegetable oils such as soybean oil, castor oil, sunflower oil, and cotton oil, and fatty acid esters. In order to obtain a gel-like sheet (gel-like formed article) in which the content of the liquid diluent is stable, it is more preferable to use a nonvolatile diluent such as liquid paraffin.

For example, the viscosity of the liquid diluent is preferably 20 cSt to 500 cSt, more preferably 30 cSt to 400 cSt, and still more preferably 50 cSt to 350 cSt at 40°C. When the viscosity of the liquid diluent is less than 20 cSt, the ejection from the die is non-uniform, and kneading tends to be difficult. When the viscosity of the liquid diluent exceeds 500 cSt, it tends to be difficult to remove the diluent.

The blending proportion of the polyolefin resin is preferably 1 mass% to 60 mass% based on 100 mass% of the total of the polyolefin resin and the diluent, from the viewpoint of improving the formability of the extruded article. The blending proportion is more preferably 10 mass% to 55 mass%, still more preferably 15 mass% to 50 mass%. When the blending proportion is 1 mass% or more, it is possible to suppress the swell and the neck-in at the outlet of the die during extrusion, and thus the film-forming property of the gel-like sheet is likely to be improved. On the other hand, when the blending proportion is set to 60 mass% or less, the differential pressure in the die portion can be kept small, and therefore, the gel-like sheet can be easily produced in a stable manner.

The uniform melting and kneading step of the polyolefin resin solution is not particularly limited, and examples thereof include a step of using a calender, various mixers, and a screw extruder.

(Production Method)

The method for producing a polyolefin microporous membrane of the present invention includes, for example, (1) a step of adding a film-forming solvent (diluent) to the polyolefin resin, and then melting and kneading the mixture to prepare a polyolefin resin solution, (2) a step of extruding the polyolefin resin solution from a die lip and then cooling to form a gel-like formed article, (3) a step of stretching the gel-like formed article at least in one axial direction (first stretching step), (4) a step of removing the film-forming solvent, (5) a step of drying the obtained film, (6) a step of re-stretching the dried film at least in one axial direction (second stretching step), and (7) a heat treatment step.

If necessary, any one of the heat fixation treatment step, the heat roll treatment step, and the hot solvent treatment step may be provided before (4) the film-formation solvent removal step. Further, after the steps (1) to (7), a drying step, a heat treatment step, a crosslinking treatment step by ionizing radiation, a hydrophilization treatment step, a surface coating treatment step, and the like can be provided.

(1) Step of Preparing Polyolefin Resin Solution

After an appropriate film-forming solvent is added to the polyolefin resin, the mixture is melt-kneaded to prepare a polyolefin resin solution. Since the melt-kneading method is well known, the description thereof will be omitted.

As the melt-kneading method, for example, a method using a twin-screw extruder described in Japanese Patent No. 2132327 and Japanese Patent No. 3347835 can be used.

However, the content of the polyolefin resin in the polyolefin resin solution may be, for example, 10 mass% to 60 mass%, and preferably 15 mass% to 50 mass%, based on 100 mass% of the total of the polyolefin resin and the film-forming solvent. When the content of the polyolefin resin is 10 mass% or more, the productivity is good. On the other hand, when the content of the polyolefin resin is 60 mass% or less, moldability of the gel-like formed article is likely to be improved.

The ratio (L/D) of the length (L) to the diameter (D) of the screw of the twin-screw extruder is preferably in the range of 20 to 100, and more preferably in the range of 35 to 70. When the ratio L/D is less than 20, the melt-kneading is likely to be insufficient. When the L/D is more than 100, the retention time of the polyolefin resin solution may be excessively increased. The shape of the screw is not particularly limited, and may be a known shape.

The cylinder inner diameter of the twin-screw extruder is preferably 40 mm to 200 mm. When the polyolefin resin is put into the twin-screw extruder, the ratio Q/Ns of the input amount Q (kg/h) of the polyolefin resin solution to the screw rotation speed Ns (rpm) is preferably 0.03 kg/h/rpm to 2.0 kg/h/rpm. When Q/Ns is less than 0.03 kg/h/rpm, the polyolefin resin is excessively sheared and broken, leading to a decrease in strength and meltdown temperature. On the other hand, when Q/Ns is more than 2.0 kg/h/rpm, uniform kneading is difficult. The ratio Q/Ns is more preferably 0.05 kg/h/rpm to 1.8 kg/h/rpm. The screw rotation speed Ns is preferably 50 rpm or more. The upper limit of the screw rotation speed Ns is not particularly limited, but Ns is preferably 500 rpm or less.

A preferred range of the temperature of the polyolefin resin solution in the extruder varies depending on the polyolefin resin, and is, for example, 140°C to 250°C in the case of containing polyethylene, and 160°C to 270°C in the case of containing polypropylene. The temperature of the polyolefin resin solution in the extruder is indirectly measured by installing a thermometer in the extruder or the cylinder portion, and the heater temperature, the rotation speed, and the discharge amount of the cylinder portion are appropriately adjusted so as to achieve the target temperature. The solvent may be added before the start of kneading, or may be added in the middle of kneading. In the melt-kneading, an antioxidant is preferably added in order to prevent oxidation of the polyolefin resin. As the antioxidant, for example, it is preferable to use one or more kinds selected from 2,6-di-t-butyl-p-cresol (BHT: molecular weight of 220.4), 1,3,5-trimethyl-2,4,6-tris(3,5-di-t-butyl-4-hydroxybenzyl) benzene (for example, "Irganox" (registered trademark) 1330: molecular weight of 775.2, manufactured by BASF), tetrakis [methylene-3 (3,5-di-t-butyl-4-hydroxyphenyl)propionate] methane (for example, "Irganox" (registered trademark) 1010: molecular weight of 1177.7, manufactured by BASF), and the like.

(2) Step of Forming Gel-like Molded Article

The polyolefin resin solution melted and kneaded in the extruder is cooled to form a resin composition containing a solvent. At this time, it is preferable to form a sheet-like resin composition by extruding from a die having a slit opening, but a so-called inflation method in which the resin composition is solidified by extrusion from a die for blown film having a circular opening can also be used. The extrusion temperature is preferably from 140°C to 250°C, more preferably from 160°C to 240°C, still more preferably from 180°C to 230°C. It is possible to prevent an excessive increase in the pressure in the die portion by setting the extrusion temperature to 140°C or more, and it is possible to prevent the deterioration of the material by setting the extrusion temperature to 250°C or less. The extrusion speed is preferably 0.2 m/min to 20 m/min.

The polyolefin resin solution extruded in the form of a sheet is cooled to form a gel-like sheet (gel-like formed article). As the cooling method, a method of contacting with a refrigerant such as cold air or cooling water, a method of contacting with the cooling roll, or the like can be used, and it is preferable that the cooling is performed by contacting with a roll cooled by the refrigerant.

For example, an unstretched gel-like sheet can be formed by bringing a polyethylene resin solution extruded into a sheet into contact with a rotating cooling roll having a surface temperature of 20°C to 40°C with a refrigerant. The extruded polyethylene resin solution is preferably cooled to 25°C or less. The cooling rate at this time is preferably 50°C/min or more. By cooling in this manner, the polyolefin phase can be separated from the solvent by microphase separation. As a result, the unstretched gel-like sheet can easily take a dense structure, and the crystallinity can be prevented from being excessively increased, so that the unstretched gel-like sheet has a structure suitable for stretching.

As a method of cooling, for the purpose of improving the cooling efficiency of the sheet and improving the sheet flatness, use may be made of a method in which two or more kinds of rolls are brought close to each other, and the resin solution discharged onto one roll is pressed by one or more rolls to cool the polyolefin resin solution. In addition, in order to form a gel-like sheet in a high-speed film formation, a chamber in which a sheet is brought into close contact with a roll may be used. The membrane thickness can be adjusted by adjusting each extrusion amount of the polyolefin resin solution. As the extrusion method, for example, the methods disclosed in Japanese Patent Application Publication No. H06-104736 and Japanese Patent No. 3347835 can be used.

(3) First Stretching Step

The obtained sheet-like gel-like formed article is stretched at least in one direction. By the first stretching, cleavage of the polyolefin (polyethylene) crystal lamella layer occurs, the polyolefin (polyethylene) phase is micronized, and a large number of fibrils are formed. The obtained fibril forms a three-dimensional network structure (a three-dimensionally and irregularly connected network structure). Since the gel-like formed article contains a film-formation solvent, it is easily stretched uniformly.

As the stretching method, stretching in two or more stages while containing a solvent is desirable. The stretching method at each stage is not particularly limited. The uniaxial stretching/simultaneous biaxial stretching and the simultaneous biaxial stretching/uniaxial stretching are also preferable. From the viewpoint of productivity and investment cost, uniaxial stretching/uniaxial stretching is also preferable. The stretching direction includes a sheet transporting direction (MD) and a sheet width direction (TD), but the order may be either MD/TD or TD/MD. The gel-like sheet can be stretched by a tenter method, a roll method, a rolling method, or a combination thereof after heating.

Although the stretching ratio varies depending on the thickness of the gel-like formed article, the stretching ratio is preferably 2 times or more, and more preferably 3 to 30 times in the uniaxial stretching. In the case of biaxial stretching, it is preferable that the stretching ratio in any direction is at least 3 times or more, that is, an area magnification is 9 times or more, such that the puncture strength is improved. When the area magnification is less than 9 times, the stretching is insufficient, and it is difficult to obtain a polyolefin microporous membrane having high elasticity and high strength. The area magnification is preferably 12 times or more, more preferably 16 times or more, still more preferably 18 times or more, and most preferably 20 times or more. On the other hand, when the area magnification exceeds 400 times, a restriction is likely to occur in view of a stretching device, a stretching operation, and the like. The area magnification is preferably 200 times or less, more preferably 160 times or less, even more preferably 150 times or less, and most preferably 140 times or less.

The temperature of the first stretching is preferably within the range of the crystal dispersion temperature of the polyolefin resin to the crystal dispersion temperature +30°C, more preferably within the range of the crystal dispersion temperature +10°C to the crystal dispersion temperature +25°C, and particularly preferably within the range of the crystal dispersion temperature +15°C to the crystal dispersion temperature +20°C. When the stretching temperature is more than the crystal dispersion temperature +30°C, the orientation of the molecular chain after stretching tends to deteriorate. On the other hand, when the temperature is less than the crystal dispersion temperature, the softening of the resin is insufficient, the film is easily broken by stretching, and it is difficult to perform stretching at a high magnification. Here, the crystal dispersion temperature refers to a value obtained by measuring the temperature characteristics of the dynamic viscoelasticity based on ASTM D4065.

When polyethylene is used as the main component of the polyolefin resin, the crystal dispersion temperature is typically 90°C to 100°C. Therefore, when the polyolefin resin contains 90 mass% or more of polyethylene, the stretching temperature is usually within the range of 90°C to 130°C, preferably within the range of 100°C to 125°C, and more preferably within the range of 105°C to 120°C.

When the sheet is preheated before the stretching, the sheet may be set at a higher temperature than the stretching temperature of the subsequent stage. The substantial temperature of the sheet can be increased in a short time, which contributes to improvement in productivity.

At the time of the first stretching, stretching of multiple stages having different temperatures may be performed. In this case, the stretching is preferably performed at different temperatures in two stages in which the temperature in the latter stage is higher than the temperature in the former stage. As a result, it is possible to obtain a polyolefin microporous membrane having a high-order structure in which the pore diameter is large and the high permeability is exhibited without a decrease in strength or a decrease in physical properties in the width direction. Although not limited, the difference between the stretching temperatures of the former stage and the latter stage is preferably set to 5°C or more.

When increasing the temperature of the film from the former stage to the latter stage, (a) the temperature may be raised while continuing the stretching, (b) the stretching may be stopped while the temperature is raised, and the latter stretching may be started after the film reaches the predetermined temperature, but the former (a) is preferable. In either case, it is preferable to rapidly heat when the temperature rises. Specifically, it is preferable to heat at a temperature rising rate of 0.1°C/sec or more, and it is more preferable to heat at a temperature rising rate of 1°C/sec to 5°C/sec. Needless to say, the stretching temperatures in the former stage and the latter stage and the total stretching ratio are preferably within the above ranges, respectively.

The stretching may be performed by providing a temperature distribution in the membrane thickness direction according to the desired physical properties, so that a polyolefin microporous membrane having more excellent mechanical strength can be obtained. As a method therefor, for example, the method disclosed in Japanese Patent No. 3347854 can be used.

The stretching may be performed in two or more stages. The stretching direction includes the sheet transporting direction (MD) and the sheet width direction (TD), but the stretching order may be either MD/TD or TD/MD. Here, as an example, a sequential stretching method in which roll stretching in the MD direction is performed and then stretching by a tenter method in the TD direction is performed will be described.

Although the stretching ratio before solvent extraction varies depending on the thickness of the gel-like sheet, the MD stretching (MDO) is preferably 2 times to 20 times. The MD stretching ratio before extraction of the solvent is more preferably from 3 times to 18 times, and still more preferably from 5 times to 15 times. When the MD stretching of 2 times or more is performed before the solvent extraction, it is possible to perform uniform stretching, and thus it is possible to suppress the expression of the non-uniform structure in the MD direction in the TD stretching following the MD stretching. By performing the MD stretching more than 5 times before the solvent extraction, the membrane thickness distribution in the MD direction becomes more uniform, and it is more preferable to suppress film quality (wrinkles, sagging) which is important in post processing.

The MD stretching can also be performed in two or more stages. In the MD stretching, the region where the MD stretching is performed is composed of a preheating portion, a stretching portion, and a heat fixing portion, and the region is heated or cooled by a roll to control the temperature of the gel-like sheet (or film during stretching). The stretching portion can perform stretching by using a difference in peripheral speed between rolls, and can perform stretching by using a stretching section divided into a plurality of stages. That is, with respect to the roll on the most upstream side (die side) in the stretching portion, the peripheral speed of the roll adjacent to the downstream side (winding side) of the roll is increased, and the gel-like sheet is stretched by utilizing the difference in peripheral speed between these two rolls. In this way, by sequentially arranging the rolls having a faster peripheral speed than upstream-side rolls on the latter stage side, the MD stretching in two or more stages (multi-stage) is performed.

Specifically, when two groups of rolls having different peripheral speeds (a group of rolls sets such that the peripheral speed of the rolls on the downstream side is faster than that of the rolls on the upstream side) are arranged in the stretching portion, the MD stretching is performed in two stages, and when three groups of rolls are arranged in the stretching portion, the MD stretching is performed in three stages. Among these roll groups, a downstream-side roll in any group and an upstream-side roll in the group of rolls adjacent to the downstream side of the aforementioned group may be integrated, so that two stages of stretching sections may be configured by, for example, three rolls.

The stretching ratio in each roll group can be the same or different. The stretching ratio at each stage is more preferably different, and the stretching ratio is increased toward the downstream side. In such a configuration, it is possible to further prevent an increase in air permeability during heat compression. The reason is not clear, but when the stretching ratios are the same, stretching is performed at a relatively high ratio in the initial stage of stretching. On the other hand, when the stretching ratios are different and increased, it is presumed that the fine structure formed by the MD stretching is likely to become uniform, and the pressure resistance is improved.

In order to improve the strength in the sheet width direction and to improve the productivity, the stretching ratio in the TD direction performed following the MD stretching is preferably from 2 times to 20 times, more preferably from 3 times to 18 times, and still more preferably from 5 times to 12 times. In order to make the film structure uniform in the TD direction (to form uniform pores), the stretching ratio in the TD direction is preferably 2 times or more, and in order to make the physical properties in the TD direction (air permeability, strength (puncture, tensile), and thermal shrinkage) more uniform, the stretching ratio in the TD direction is more preferably 5 times or more. By setting the stretching ratio in the TD direction to 12 times or less, it is possible to suppress the occurrence of the physical property variation based on the high stretching ratio. From the viewpoint of production stability (in order to obtain uniform physical properties in the TD direction while stabilizing the productivity), the stretching ratio in the TD direction is more preferably 10 times or less.

The total area magnification of the MD stretching and the TD stretching before the solvent extraction is preferably 25 times or more, more preferably 30 times or more, and most preferably 40 times or more. In order to improve the strength, the stretching before the solvent extraction is preferably 25 times or more in terms of the area magnification. On the other hand, the area magnification of the stretching before solvent extraction is preferably 400 times or less, more preferably 200 times or less, even more preferably 160 times or less, even more preferably 150 times or less, and most preferably 140 times or less. When the area magnification of the stretching before solvent extraction is 400 times or less, it is easy to obtain the stability at the time of film formation, which is preferable in terms of production of the polyolefin microporous membrane.

The stretching temperature is preferably equal to or less than the melting point of the polyolefin resin in both the MD stretching (MDO) and the TD stretching (TDO), more preferably (the crystal dispersion temperature Tcd of the polyolefin resin) to (the melting point of the polyolefin resin -5°C), and still more preferably the range of (the crystal dispersion temperature Tcd +5°C) to (the melting point of the polyolefin resin -5°C). For example, the stretching temperature in the case of the polyethylene resin is about 90°C to 130°C, preferably from 100 to 127°C, and more preferably from 105°C to 125°C.

When the stretching temperature is equal to or higher than the crystal dispersion temperature of the polyolefin resin, generation of microcracks at the time of stretching can be suppressed, so that the coarsening of the pore diameter (particularly the maximum pore diameter, BP) can be finally prevented, and since the ion permeation becomes uniform, Li dendrite is less likely to be generated, and it is easy to maintain good battery performance. When the stretching temperature is equal to or lower than the melting point of the polyolefin resin, stretching is likely to occur uniformly, occurrence of wrinkles or sagging is reduced, and the productivity of the separator is ensured.

The stretching speed in the TD stretching (TDO) can be determined from the film forming speed and the position of a clip (a portion for holding the film) in the width direction (TD direction). By controlling the rail position in the furnace in the TD direction, the widening speed in the TD direction, that is, the stretching speed can be controlled. The stretching speed is preferably controlled to a constant speed in a range of preferably 80% or more, more preferably 85% or more, and still more preferably 90% or more in the entire stretching stage in the TD stretching. The stretching speed of the TD stretching set at a constant speed in this manner is preferably 200%/sec or less, more preferably 150%/sec or less, still more preferably 130%/sec or less. By setting the stretching speed of the TD stretching to 200%/sec or less, residual stress in the separator can be reduced, and stable production is possible with low possibility of production interruption due to film breakage or the like.

The stretching speed of the TD stretching is preferably 10%/sec or more, more preferably 15%/sec or more, still more preferably 45%/sec or more. By setting the stretching speed of the TD stretching to 10%/sec or more, it is possible to reduce the cost of equipment investment, and it is possible to produce a separator which is economically useful. The deviation of the stretching speed of the TD stretching (maximum stretching speed - minimum stretching speed) is preferably 70%/sec or less, more preferably 50%/sec or less, still more preferably 20%/sec or less, and most preferably 5%/sec or less. By controlling the deviation of the stretching speed of the TDO stretching to a certain value or less, entanglement of the ultrahigh molecular weight component is uniformly developed, and high impact absorption properties can be obtained.

(4) Step of Removing Film-forming Solvent

A cleaning solvent is used for removing (cleaning) the film-forming solvent. Since the polyolefin phase is phase-separated from the film-forming solvent, a porous film is obtained when the film-forming solvent is removed. Since the cleaning solvent and the method for removing the film-forming solvent using the cleaning solvent are known, the description thereof will be omitted. For example, the methods disclosed in Japanese Patent No. 2132327 specification and JP-A-2002-256099 can be used.

(5) Drying Step of Film

The polyolefin microporous membrane obtained by removing the film-formation solvent is dried by heat drying method, air drying method, or the like.

(6) Second Stretching Step

The dried film may be stretched at least in one direction. The second stretching can be performed by a tenter method or roll stretching in the same manner as the first stretching while the film is heated. The second stretching may be uniaxial stretching or biaxial stretching. The extending direction includes the sheet transporting direction (MD) and the sheet width direction (TD), but the stretching order may be either MD/TD or TD/MD.

The temperature of the second stretching is preferably in the range from the crystal dispersion temperature to the crystal dispersion temperature +40°C of the polyolefin resin constituting the polyolefin microporous membrane, and more preferably in the range of the crystal dispersion temperature +10°C to the crystal dispersion temperature +40°C. When the temperature of the second stretching is more than the crystal dispersion temperature +40°C, the permeability is decreased, or the variation in physical properties in the sheet width direction when stretched in the transverse direction (width direction: TD direction) becomes large. In particular, the variation of the air permeability in the sheet width direction increases. On the other hand, when the temperature of the second stretching is less than the crystal dispersion temperature, the softening of the polyolefin resin is insufficient, the polyolefin resin is likely to be broken in stretching, and it is difficult to uniformly stretch. When the polyolefin resin is made of polyethylene, the stretching temperature may be, for example, in the range of 90°C to 140°C, and is preferably in the range of 100°C to 140°C.

The ratio of the second stretching in one direction is preferably 1.1 times to 3.0 times. For example, in the case of uniaxial stretching, the ratio is set to 1.1 times to 3.0 times in the longitudinal direction (mechanical direction: MD direction) or the TD direction. In the case of biaxial stretching, the ratio in each of the MD direction and the TD direction is set to 1.1 times to 3.0 times. In the case of biaxial stretching, the stretching ratio in the MD direction and the stretching ratio in the TD direction may be different from each other in each direction as long as the stretching ratio is 1.1 times to 3.0 times. When the ratio is less than 1.1 times, the polyolefin microporous membrane has poor productivity per hour. On the other hand, when the ratio is more than 3.0 times, the film is likely to break during production of the polyolefin microporous membrane, and the pore diameter becomes large, which may cause a problem in voltage endurance when used in a battery. The ratio of the second stretching is more preferably 1.2 times to 2.0 times.

The second stretching speed is preferably 3%/sec or more in the stretching axial direction. For example, in the case of uniaxial stretching, it is preferable to set to 3%/sec or more in the MD direction or the TD direction. For example, in the case of biaxial stretching, it is preferably set to 3%/sec or more in each of the MD direction and the TD direction.

The stretching speed (%/sec) in the stretching axial direction represents the ratio of the length to be stretched per second, where the length in the stretching axial direction before the re-stretching is 100% in the region where the film (sheet) is re-stretched.

When the stretching speed is less than 3%/sec, the permeability may be lowered, or the variation in the physical properties in the sheet width direction may be increased when the sheet is stretched in the TD direction. In particular, the variation in the air permeability in the width direction of the stretched sheet is likely to be large. The second stretching speed is preferably 5%/sec or more, and more preferably 10%/sec or more.

In the case of biaxial stretching, the stretching speeds in the MD direction and the TD direction may be different from each other in the MD direction and the TD direction as long as the stretching speeds in the MD direction and the TD direction are 3%/sec or more, but are preferably the same. The upper limit of the second stretching speed is not particularly limited, but the second stretching speed is preferably 300%/sec or less from the viewpoint of preventing breakage.

(7) Heat Treatment Step

The film after the second stretching is subjected to a heat treatment. As the heat treatment method, a heat fixation treatment and/or a heat relaxation treatment may be used. In particular, the crystal of the film is stabilized by the heat fixation treatment. Therefore, a network structure made of a fibril formed by the second stretching is held, and a polyolefin microporous membrane having a large pore diameter and excellent strength can be produced.

The heat fixation treatment is performed, for example, in a temperature range of a crystal dispersion temperature to a melting point of the polyolefin resin constituting the polyolefin microporous membrane. The heat fixation treatment temperature is preferably in the range of the second stretching temperature ±5°C, and thus the physical properties are easily stabilized. This temperature is more preferably within the range of the second stretching temperature ±3°C. Even in the case where the second stretching is not performed, the heat fixation treatment temperature is preferably performed within a temperature range of the crystal dispersion temperature to the melting point of the polyolefin resin, and more preferably 90°C to 135°C in order to achieve both the permeability and the thermal shrinkage. The heat fixation treatment is performed by a tenter method, a roll method, or a rolling method. As the heat relaxation treatment method, for example, the method disclosed in JP-A-2002-256099 can be used.

The polyolefin microporous membrane may be a single-layer film or may have a layer configuration formed of two or more layers having different molecular weights or different average pore diameters. In the case of a layer configuration formed of two or more layers, it is preferable that the molecular weight and the molecular weight distribution of at least one outermost layer of the polyolefin resin satisfy the above ranges.

The multilayer polyolefin microporous membrane formed of two or more layers can be produced, for example, by any one of a method in which each polyolefin resin constituting an A layer and a B layer is heat-melted and kneaded with a molding solvent, each of the obtained resin solutions is supplied from each extruder to one die, integrated and co-extruded, a method in which the gel-like sheets constituting each layer are laminated and thermally fused, a method of thermal fusion bonding of the resins after stretching the resins individually, and a method of performing thermal fusion bonding after the solvent is removed. The co-extruding method is preferable since it is easy to obtain an adhesive strength between layers and it is easy to form communication pores between layers, so that high permeability is easily maintained, and productivity is also excellent.

According to the above manufacturing method, a polyolefin microporous membrane having a large number of pores, achieving high puncture strength, high tensile strength, achieving both high elongation and low thermal shrinkage can be obtained.

Although not limited, it is preferable to adopt an in-line method in which the first stretching, the film-formation solvent removal, the drying treatment, the second stretching, and the heat treatment are continuously performed on a series of lines. However, an offline method may be adopted as necessary, in which the film after the drying treatment is once wound into a film, and the second stretching and the heat treatment are performed while rewinding the film.

(8) Other Steps

(a) Heat Fixing Treatment Step, Heat Roll Treatment Step, and Hot Solvent Treatment Step before Cleaning, after Cleaning, and during Second Stretching Step

Before the film-forming solvent is removed from the gel-like formed article subjected to the first stretching, any one of the heat fixation treatment step, the heat roll treatment step, and the hot solvent treatment step may be provided.

Further, a step of heat-fixing the film after the cleaning or during the second stretching step may be provided.

(i) Heat-Fixing Treatment

The method of heat-fixing the stretched gel-like formed article before and/or after cleaning and the film during the second stretching step may be the same as described above.

(ii) Heat Roll Treatment Step

A treatment (heat roll treatment) of bringing a heat roll into contact with at least one surface of the stretched gel-like formed article before cleaning may be performed. As a heat roll treatment method, for example, the method described in JP-A-2007-106992 can be used. When the method described in JP-A-2007-106992 is used, the stretched gel-like formed article is brought into contact with a heating roll whose temperature is adjusted to the crystal dispersion temperature of the polyolefin resin +10°C or higher and lower than the melting point of the polyolefin resin. The contact time between the heating roll and the stretched gel-like formed article is preferably 0.5 seconds to 1 minute. The heating oil may be held on the surface of the roll and brought into contact with the roll surface. The heating roll may be either a smoothing roll or an uneven roll which may have a suction function.

(iii) Hot Solvent Treatment Step

The stretched gel-like formed article before cleaning may be brought into contact with a hot solvent. As the hot solvent treatment method, for example, the method disclosed in WO 2000/020493 can be used.

(b) Crosslinking Treatment Step of Membrane

The polyolefin microporous membrane after the heat treatment may be subjected to a crosslinking treatment by ionizing radiation using $\alpha$-rays, $\beta$-rays, $\gamma$-rays, electron beams, or the like, so that the meltdown temperature can be improved. This treatment can be performed by an electron dose of 0.1 Mrad to 100 Mrad and an acceleration voltage of 100 kV to 300 kV

(c) Hydrophilization Treatment Step

The polyolefin microporous membrane after the heat treatment may be hydrophilized by monomer graft treatment, surfactant treatment, corona discharge treatment, plasma treatment, or the like.

(d) Surface Coating Treatment Step

When the surface of the polyolefin microporous membrane after the heat treatment is coated with a fluororesin porous body such as polyvinylidene fluoride or polytetrafluoroethylene, or a porous body such as PA (polyamide), PAI (polyamide-imide), PI (polyimide), or PPS (polyphenylene sulfide), the meltdown characteristics when the polyolefin microporous membrane is used as a separator for a battery is improved. A coating layer containing PP (polypropylene) may be formed on at least one surface of the polyolefin microporous membrane after the second stretching. Examples of the coating PP include those disclosed in WO 2005/054350.

As one aspect, an example of a method for manufacturing a polyolefin microporous membrane having a large number of pores and excellent toughness is a method of using a raw material made of ultrahigh molecular weight polyethylene, and stretching to a high stretching ratio of more than 25 times, for example, 100 times or more at a wet and dry total area magnification. As a result, a polyolefin microporous membrane having excellent output characteristics at a low temperature can be obtained.

The polyolefin microporous membrane according to a preferred embodiment of the present invention has the following physical properties.

(1) Membrane thickness ($\mu$m)

In recent years, the membrane thickness of the polyolefin microporous membrane is preferably from 3 $\mu$m to 25 $\mu$m, more preferably from 3 $\mu$m to 22 $\mu$m, still more preferably from 5 $\mu$m to 20 $\mu$m, and most preferably from 5 $\mu$m to 12 $\mu$m, since increase in density and capacity of a battery has advanced in recent years. By setting the membrane thickness to 3 $\mu$m or more, a separator with ensured insulation properties can be obtained. By setting the membrane thickness to 25 $\mu$m or less, the film has high safety and is suitable for high output and high capacity.

(2) Air Permeability (sec/100cm$^3$) and Normalized Air Permeability (sec/100cm$^3$/μm)

The normalized air permeability (Gurley value) is preferably 100 sec/100cm$^3$/μM or less. When the normalized air permeability is 100 sec/100cm$^3$/μm or less, good ion conductivity is exhibited when the polyolefin microporous membrane is used for a battery.

The air permeability is preferably 20 sec/100cm$^3$ or more. In the case where the polyolefin microporous membrane is used in the battery, when the air permeability is too low, that is, the permeability is too high without depending on the membrane thickness, a short circuit is likely to occur at the time of battery manufacturing, and even when used as a battery, the discharging is likely to proceed during storage, and thus the air permeability is preferably 20 sec/100cm$^3$ or more.

The air permeability and the normalized air permeability can be adjusted by a resin composition (melting point, molecular weight distribution of a polyethylene mixture such as ultrahigh molecular weight polyethylene), a stretching temperature and a stretching ratio before solvent extraction, a dry stretching temperature and a dry stretching ratio after cleaning, and a resin composition.

(3) Porosity (%)

The porosity is preferably 25% to 80%. When the porosity is 25% or more, good air permeability and normalized air permeability can be obtained. When the porosity is 80% or less, the strength when the polyolefin microporous membrane is used as a battery separator is sufficient, and a short circuit can be suppressed. The porosity is more preferably 25% to 60%, still more preferably 25% to 50%. When the porosity is within the range, both the tensile strength and the tensile elongation are suitable.

(4) Puncture Strength (mN) by Membrane thickness of 10 μm

The puncture strength is preferably 2000 mN (204 gf) or more in terms of a membrane thickness of 10 μm, and more preferably 3500 mN (357 gf) or more. The puncture strength is particularly preferably 4000 mN or more, even more preferably 4500 mN or more, and most preferably 5000 mN or more. When the puncture strength in terms of a membrane thickness of 10 μm is 2000 mN or more, when the polyolefin microporous membrane is incorporated in a battery as a battery separator, a decrease in yield at the time of battery production is prevented and storage stability is ensured, which is preferable. When the membrane thickness is T, the puncture strength in terms of a membrane thickness of 10 μm is obtained by the following formula (7).

$$\text{Puncture strength (mN) in terms of a membrane thickness of 10 μm} = (\text{puncture strength (mN)}/T \text{ (μm)}) \times 10 \text{ (μm)} \quad \text{Formula (7)}$$

(5) Tensile strength (MPa) and Average Tensile Strength (MPa)

The tensile strength is preferably 80 MPa or more in both the MD direction and the TD direction. When the tensile strength is within this range, the risk of film breakage can be suppressed.

The tensile strength in the MD direction and the TD direction is more preferably 110 MPa or more, still more preferably 140 MPa or more, particularly preferably 160 MPa or more. When the tensile strength is within the above preferable range, the film is less likely to break when an impact is applied to the battery.

(6) Tensile Elongation (%) and Average Tensile Elongation (%)

The tensile elongation is preferably 30% or more in both the MD direction and the TD direction. In this case, when the battery is manufactured and when an external force acts on the battery, the possibility of breakage of the separator is reduced. The tensile elongation in the MD direction and the TD direction is more preferably 40% or more, still more preferably 45% or more, particularly preferably 50% or more. When the tensile elongation is in the above preferable range, the energy tends to be easily absorbed when an impact is applied to the battery.

(7) Toughness (MPa%)

The toughness which is a measure of the impact resistance obtained from the tensile strength and the tensile elongation can be calculated from the following calculation formula (4) using the tensile strength in the MD direction (MD tensile strength), the tensile elongation in the MD direction (MD tensile elongation), the tensile strength in the TD direction (TD tensile strength), and the tensile elongation in the TD direction (TD tensile elongation).

$$\text{Toughness (MPa\%)} = \text{MD tensile strength (MPa)} \times \text{MD tensile elongation (\%)} +$$

$$\text{TD tensile strength (MPa)} \times \text{TD tensile elongation (\%)} \quad \text{Formula (4)}$$

The toughness is preferably 20,000 MPa% or more, more preferably 25,000 MPa% or more, still more preferably 30,000 MPa% or more, and most preferably 40,000 MPa% or more from the viewpoint of impact resistance. In terms of the upper limit, the toughness is 500,000 MPa% or less, more preferably 400,000 MPa% or less, still more preferably 300,000 MPa% or less, most preferably 200,000 MPa% or less, since other physical properties, for example, ion permeability is likely to be deteriorated.

(8) MD, TD Maximum Thermal Shrinkage (%)

By TMA (thermomechanical analysis) under a constant load, it is possible to measure the maximum shrinkage (HSMD) in the MD direction and the maximum shrinkage (HSTD) in the TD direction.
It is preferable that the sum of the HSMD and the HSTD represented by the formula (6) is 80% or less.

$$\text{Maximum shrinkage obtained from the TMA method} = \text{HSMD (\%)} + \text{HSTD (\%)} \quad \text{Formula}$$

$$(6)$$

When the thermal shrinkage obtained in the formula (6) is 80% or less, the occurrence of a short circuit between the electrodes can be suppressed even when the polyolefin microporous membrane is used as a separator for large-sized lithium battery by performing an inorganic coating treatment or the like.
Therefore, in order to suppress the short circuit between the electrodes even during heat generation of the battery, the thermal shrinkage obtained by the formula (6) is preferably 80% or less, more preferably 70% or less, still more preferably 60% or less. When the thermal shrinkage obtained by the formula (6) is 60% or less, heat resistance can be improved by a thin coating layer, which is advantageous for ion permeability.
The TMA measurement method is as follows.
Using a thermomechanical analyzer (TMA/SS 6100 manufactured by Hitachi High-Tech Science Co., Ltd.), the temperature can be raised and scanned to measure the shrinkage behavior.
The measurement conditions are: sample shape: width 3 mm × length 10 mm, load: 19.6 mN (membrane thickness of 10 $\mu$m or more)/9.8 mN (membrane thickness less than 10 $\mu$m), temperature scanning range: 30°C to 210°C, temperature rise rate 10°C/min. The measurement is performed by sampling such that each direction of MD and TD is in the length direction. In the range of 110°C or more and 160°C or less, a portion exhibiting the highest shrinkage is selected, and the shrinkage is calculated.
In addition, it is preferable to satisfy the following formula with an average number of pores described later. When the following formula is satisfied, the thermal shrinkage is low as well as the ion permeability, and good ion permeability and high safety are exhibited.

$$\text{Average number of pores} \geq 60 + \text{TMA Max value} \times 1.333 \quad \text{Formula (8)}$$

In the above formula, the TMA Max value represents the maximum shrinkage measured by the thermomechanical analyzer.

(9) Average Pore Diameter and Maximum Pore Diameter (nm)

The average pore diameter and the maximum pore diameter of the polyolefin microporous membrane can be measured by the following method using a porosity meter.
First, for each of a sample in a dry state (hereinafter, also simply referred to as a "dry sample") and a sample in a wet state in which pores are filled with a measurement liquid (hereinafter, also simply referred to as a "wet sample"), the relationship between the air pressure and the air flow rate is measured using a porometer, and the aeration curve (Dry Curve) of the dry sample and the aeration curve (Wet Curve) of the wet sample are obtained.

The wet sample in which the pores are filled with the measurement liquid exhibits the same characteristics as those of the capillary filled with the liquid. When the wet sample is set in the porometer and the air pressure is gradually increased, the air pressure overcomes the surface tension of the measurement liquid in the pores in order from the pores having a large diameter, the measurement liquid is pushed out from the inside of the pores, and accordingly, the air flow rate gradually increases, and finally the sample reaches a dry state. Therefore, the pore diameter can be calculated by measuring the pressure when the liquid is pushed out from the pores.

Assuming that the shape of the pores is substantially cylindrical, the condition for the air of a pressure P to enter the pores of a diameter D is expressed by the Washburn formula shown in the following formula (9), where $\gamma$ is the surface tension of the measurement liquid and $\theta$ is the contact angle of the measurement liquid.

$$PD = 4\gamma\cos\theta \quad \text{Formula (9)}$$

In particular, a measurement point at which the generation of bubbles is first detected (measurement point indicating the maximum pore diameter) is referred to as a bubble point. Examples of the standard measurement method of the bubble point include the method described in ASTM F316-86.

The average pore diameter of the polyolefin microporous membrane can be determined based on the half dry method defined in ASTM E1294-89 using the aeration curve (Dry Curve) of the dry sample and the aeration curve (Wet Curve) of the wet sample. The average pore diameter (Mean Flow Pore Diameter) of the polyolefin microporous membrane is calculated by obtaining the pressure at the point where the curve (Half Dry Curve) with a slope of a half of the ventilation curve (Dry Curve) of the dry sample intersects with the ventilation curve (Wet Curve) of the wet sample as a mean flow pressure, and substituting the mean flow pressure into the above formula (9).

On the other hand, when the air flow rate of the wet sample at the pressure Pj is Fw,j and the air flow rate of the dry sample at the pressure Pj is Fd,j, the cumulative filter flow rate (CFF, unit: %) and the pore size frequency (PSF, unit: %) are determined by the following formulas (10) and (11), respectively.

In formula (11), (CFF)j represents the accumulated filter flow rate at the pressure Pj.

$$CFF = [(Fw,j/Fd,j) \times 100] \quad \text{Formula (10)}$$

$$PSF = (CFF)j + 1 - (CFF)j \quad \text{Formula (11)}$$

The average pore diameter is preferably 5 nm or more, more preferably 10 nm or more, still more preferably 15 nm or more, and most preferably 20 nm or more from the viewpoint of ion permeability. The average pore diameter is preferably 80 nm or less, more preferably 70 nm or less, still more preferably 60 nm or less, and most preferably 50 nm or less, from the viewpoint of the life of the battery.

The maximum pore diameter is equal to or larger than the average pore diameter, and is preferably 15 nm or more, more preferably 20 nm or more, still more preferably 25 nm or more, and most preferably 28 nm or more from the viewpoint of ion permeability. The maximum pore diameter is required to have a high level of insulation properties since the membrane thickness has become thin, and is preferably 150 nm or less, more preferably 100 nm or less, still more preferably 80 nm or less, and most preferably 60 nm or less.

The ratio of the maximum pore diameter to the average pore diameter, the maximum pore diameter/average pore diameter is preferably 1.05 or more, more preferably 1.1 or more, still more preferably 1.2 or more, and most preferably 1.3 or more from the viewpoint of ion permeability. The maximum pore diameter/average pore diameter is preferably 3.0 or less, more preferably 2.5 or less, still more preferably 2.2 or less, and most preferably 2.0 or less since the expansion of the pore diameter distribution may shorten the battery life due to the local flow of ions. When the maximum pore diameter/the average pore diameter is adjusted to the above range, high ion permeability can be exhibited while ensuring insulation properties.

(10) Tortuosity

The tortuosity can be calculated by the following formula (2).

$$\text{Tortuosity } \tau = (d \times (\varepsilon/100) \times 500/(3 \times L \times 101300 \times R_{gas}))^{0.5} \quad \text{Formula (2)}$$

Where d is the average pore diameter ($\mu$m) determined by the porometer, $\varepsilon$ is the porosity (%), and L is the

membrane thickness ($\mu$m).

$R_{gas}$ represents a gas permeation constant (m$^3$/(m$^2$·sec·Pa)) calculated by the following formula (3).

$$R_{gas} = 0.0001/(G \times (6.424 \times 10^{-4}) \times (0.01276 \times 101325)) \qquad \text{Formula (3)}$$

G represents Gurley (air permeability, sec/100cm$^3$).

The tortuosity is preferably 1.05 or more, more preferably 1.07 or more, still more preferably 1.10 or more, and most preferably 1.20 or more from the viewpoint of preventing a short circuit when used in a battery. From the viewpoint of permeability, the tortuosity is preferably 5.0 or less, more preferably 4.0 or less, still more preferably 3.0 or less, even more preferably 2.0 or less, and most preferably 1.8 or less. When the tortuosity is within the above range, the polyolefin microporous membrane is likely to have excellent ion permeability while ensuring insulation properties.

(11) Average Number of Pores ($\mu$m$^3$)

The average number of pores can be calculated by the following formula (1).

$$\text{Average number of pores} = 4 \times (\varepsilon/100)/(\pi \times d^2 \times \tau \times L) \qquad \text{Formula (1)}$$

Where $\varepsilon$ is the porosity (%), d is the average pore diameter ($\mu$m) obtained by the porometer, $\tau$ is the tortuosity (dimensionless) determined by the formula (2), and L is the membrane thickness ($\mu$m).

The average number of pores indicates the number of flow paths of ion permeation, and the average number of pores is preferably 40/$\mu$m$^3$ or more, more preferably 50/$\mu$m$^3$ or more, still more preferably 60/$\mu$m$^3$ or more, particularly preferably 70/$\mu$m$^3$ or more, and most preferably 90/$\mu$m$^3$ or more, from the viewpoint of ion permeability. The average number of pores is preferably 500/$\mu$m$^3$ or less, more preferably 400/$\mu$m$^3$ or less, still more preferably 300/$\mu$m$^3$ or less, and most preferably 200/$\mu$m$^3$ or less. The preferred overall porosity is determined by the balance of physical properties, and when the average number of pores is large, the diameter of each pore becomes smaller, which may deteriorate the ion permeability. Therefore, the average number of pores is preferably equal to or less than the upper limit described above.

(12) Value of Toughness × Average Number of Pores

From the average number of pores and toughness obtained by the above formula (1) and the above formula (4), the value of the toughness × the average number of pores obtained from the following formula (12) is calculated.

$$\text{Value of toughness} \times \text{average number of pores (kMPa\%/$\mu$m}^3) = \text{Toughness (MPa\%)}$$
$$\times \text{ average number of pores (/$\mu$m}^3)/1000 \qquad \text{Formula (12)}$$

As described later, the polyolefin microporous membrane having a high value of the toughness × the average number of pores can suppress a decrease in battery characteristics (capacity retention rate described later) at 0°C, and can be used up to a high rate.

The value of the toughness × the average number of pores is preferably 2500 (kMPa%/$\mu$m$^3$) or more, more preferably 2800 (kMPa%/$\mu$m$^3$) or more, still more preferably 3000 (kMPa%/$\mu$m$^3$) or more, particularly preferably 3500 (kMPa%/$\mu$m$^3$) or more, and most preferably 4000 (kMPa%/$\mu$m$^3$) or more. The upper limit of the value of the toughness × the average number of pores is also preferably 30,000 (kMPa%/$\mu$m$^3$) or less, more preferably 28,000 (kMPa%/$\mu$m$^3$) or less, still more preferably 25,000 (kMPa%/$\mu$m$^3$) or less, particularly preferably 20,000 (kMPa%/$\mu$m$^3$) or less, and most preferably 10,000 (kMPa%/$\mu$m$^3$) or less. When the value of the toughness × the average number of pores is 30,000 (kMPa%/$\mu$m$^3$) or less, the pore diameter that can ensure the ion permeability is easily secured, and the battery characteristics at a low temperature can be secured.

(13) Relationship between Toughness and Average Number of Pores

In the present invention, the relationship represented by the following formula (5) is satisfied between the toughness and the average number of pores.

$$\text{Average number of pores} \geq 160 - 2.3 \times 10^{-3} \times \text{Toughness} \qquad \text{Formula (5)}$$

When the relationship of the above formula (5) is satisfied, the absolute value of m2 indicating the ratio of the capacity reduction with the increase of the rate becomes small, and thus the polyolefin microporous membrane of the present invention has excellent performances in the rate properties at a low temperature.

Although the reason is not clear, it is considered that the larger the number of pores which is the number of flow paths through which ions flow, the more advantageous for the characteristics at a higher rate. However, since the number of pores increases, the number of voids increases, and it is considered that the toughness cannot withstand the rapid expansion and shrinkage of the electrode during rapid charging/discharging, and the ion permeability is likely to be deteriorated. It is considered that the improvement of the battery characteristics could be achieved at a high rate by keeping the toughness that can withstand the rapid expansion and shrinkage of the electrode and the number of flow paths through which ions flow at a certain number or more.

The present inventors have focused on physical properties related to permeability, porosity, average pore diameter, average number of pores, and the like, since it is expected that the pore structure through which ions permeate has a high possibility of affecting the ion permeability. In view of the expansion and shrinkage of the electrode occurring in the battery at the time of rapid charging/discharging, the physical properties related to the strength such as puncture strength and tensile strength have been focused on.

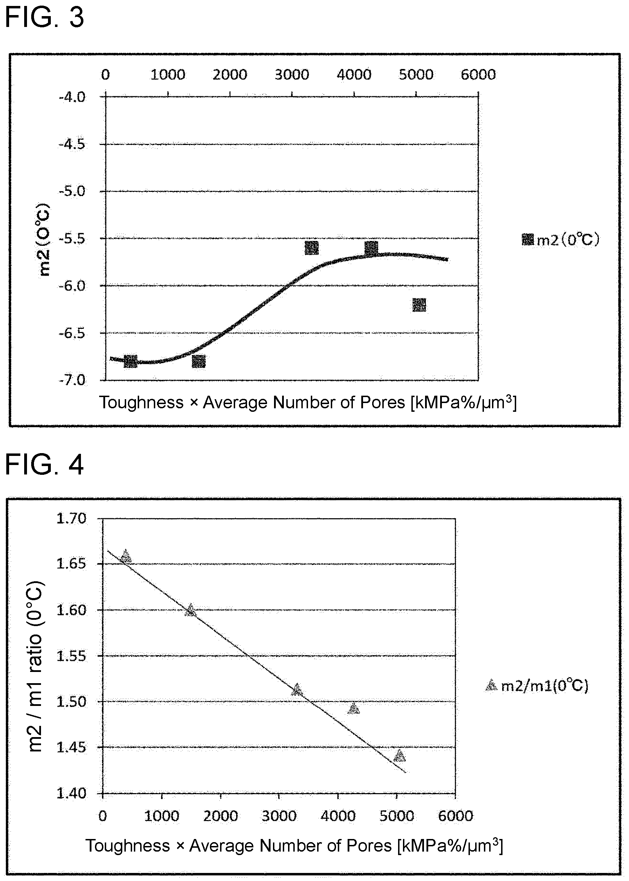

As a result of studies, the present inventors have found a correlation between m1 and m2 at 0°C obtained from the battery evaluation method described later and the average number of pores and the toughness. As shown in FIG. 3 and FIG. 4, when m2 and m2/m1 at 0°C were arranged with respect to the value of the toughness × the average number of pores obtained by multiplying the toughness and the average number of pores, it became clear that the larger the value of the toughness × the average number of pores, the smaller the absolute value of m2 at 0°C and the smaller m2/m1 at 0°C. It has been found that the region of the comparative example is different from the region of the example in which the absolute value of m2 is small (the slope of deterioration is small) when the toughness was plotted on the X axis and the average number of pores was plotted on the Y axis. The boundary was linear, and the relationship of the above formula (5) was derived.

In order to satisfy the relationship of the above formula (5), for example, a polyolefin microporous membrane having a large number of pores and excellent toughness may be manufactured. Examples of the manufacturing thereof include a method in which a raw material formed of ultrahigh molecular weight polyethylene is used, and the raw material is stretched to a high stretch ratio of more than 25 times, for example, 100 times or more, at a wet and dry total area magnification.

Note that the polyolefin microporous membrane of the present invention has a feature that the toughness obtained from the tensile strength and the tensile elongation is high despite having a significantly large average number of pores, and thus it is considered difficult to specify the polyolefin microporous membrane except that the relationship of the above formula (5) is satisfied.

(14) Battery Evaluation Method

The energy release rate per unit hour is defined as a rate. The speed at which the battery capacity of the battery used is consumed in 1 hour is denoted by 1C, and the speed at which the battery capacity of the battery used is consumed for 5 minutes is 12C, for example. The capacity that can be used as a battery is determined by changing the rate. The capacity measured at 0.2C is defined as 100, and the relatively expressed value is defined as the capacity retention rate (%).

In order to evaluate the rate characteristics of the polyolefin microporous membrane, a charge/discharge test is performed by incorporating the polyolefin microporous membrane as a separator in a non-aqueous electrolyte secondary battery including a positive electrode, a negative electrode, a separator, and an electrolyte.

A cathode in which NMC 532 (lithium nickel-manganese-cobalt composite oxide ($Li_{1.05}Ni_{0.50}Mn_{0.29}Co_{0.21}O_2$)) is laminated and an anode in which natural graphite is laminated are used. The separator is used by drying a polyolefin microporous membrane in a vacuum oven at room temperature. The electrolytic solution is prepared by dissolving 0.5 mass% of vinylene carbonate (VC) and 1 mol/L of $LiPF6$ in a mixture of ethylene carbonate, ethyl methyl carbonate, and dimethyl carbonate. The positive electrode, the separator, and the negative electrode are stacked, the obtained laminate is disposed in a laminate pouch, an electrolytic solution is injected into the laminate pouch, and the laminate pouch is vacuum-sealed to prepare a non-aqueous electrolyte secondary battery.

The prepared non-aqueous electrolyte secondary battery is initially charged, and an initial charge/discharge treatment described later is performed to obtain the initial state of the non-aqueous electrolyte secondary battery.

Next, constant current-constant voltage (CC-CV) charging (termination current condition: 0.05C) with a charging current value of 0.2C and constant current (CC) discharging with a discharging current value of 0.2C are performed in a predetermined temperature and voltage range, and the discharge capacity at that time is set to 0.2C capacity.

Next, after CC-CV charge (termination current condition 0.05C) with a voltage range of 2.75V to 4.2V and a charging current value of 0.5C under the same temperature condition, the rate test of the non-aqueous electrolyte secondary battery is performed by changing the discharge rate at a predetermined temperature.

The temperature is set to 0°C, 15°C, and 35°C, respectively, and 3 levels or more of the discharge rate are selected between 1C (18 mA, 1.44 mA/cm$^2$) and 20C at each temperature, and the evaluation is performed. At each temperature level, the capacity retention rate at each rate is defined as in formula (13).

$$\text{Capacity retention rate at each rate } (\%) = (\text{capacity at each rate/capacity at } 0.2C) \times 100 \quad \text{Formula (13)}$$

(15) Analysis Method during Battery Output Test

(15-1) Rate characteristic index calculation at a predetermined temperature (m1, m2, and cross rate)

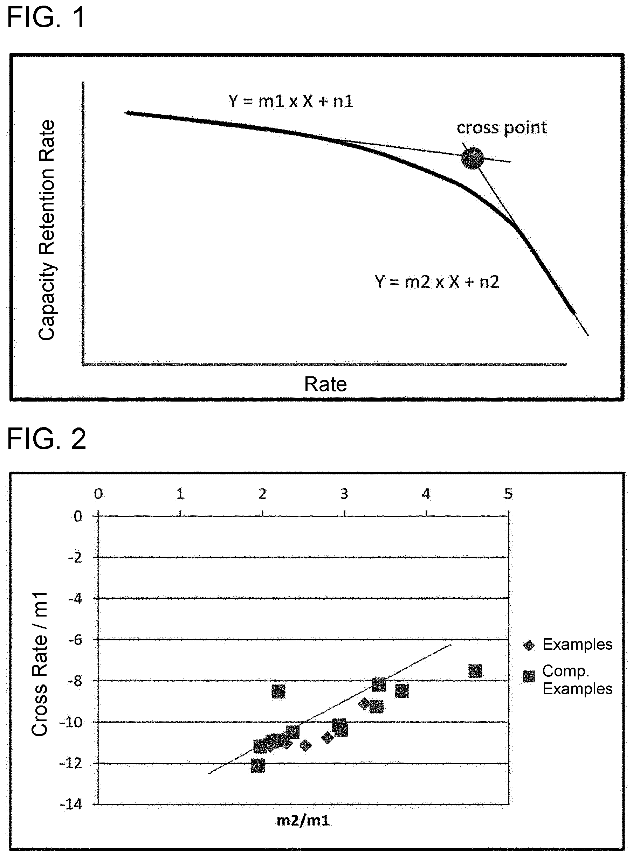

The tendency of capacity retention rate at each rate with respect to the rate is shown as a schematic diagram in FIG. 1. In general, the capacity retention rate is reduced by increasing the rate. By rapidly charging/discharging, the movement of lithium ions between the electrodes becomes insufficient, and the capacity that can be used as a battery decreases as compared with a low rate.

The dependency on the rate proceeds in two stages, and the approximate formula is set on each of the low rate side and the high rate side where the capacity is greatly reduced, and the tendency of the capacity retention rate with respect to the rate is quantified. Here, the low rate side is defined as the primary degradation region and the high rate side is defined as the secondary degradation region, and m1 (primary deterioration region coefficient), m2 (secondary deterioration region coefficient), and cross rate defined below are determined.

As shown in formula (13), the capacity retention rate is calculated at a rate of at least 3 levels or more obtained based on the capacity at 0.2C. The linear formula (14) of the primary deterioration region is approximated from two points of the capacity retention rate at the lowest rate and the capacity retention rate at the second lowest rate, and m1 and n1 are determined.

$$\text{Capacity retention rate } (\%) \text{ at X rate} = m1 \times X + n1 \quad \text{Formula (14)}$$

Similarly, in the secondary degradation region, the linear formula (15) of the secondary degradation region is approximated from two points of the capacity retention rate at the highest rate and the capacity retention rate at the second highest rate, and m2 and n2 are determined.

$$\text{Capacity retention rate } (\%) \text{ at X rate} = m2 \times X + n2 \quad \text{Formula (15)}$$

The cross rate is calculated from an intersection of these. When the capacity retention rate is measured by changing the rate as described above, the capacity rapidly decreases at a high rate. As the battery, it is desirable to maintain the capacity up to a higher rate, and the cross rate at which the formula (14) and the formula (15) intersect is an index representing the change point of the capacity retention rate, and a higher cross rate is preferable.

In addition, m1 means a rate at which the rate increases and the capacity retention rate decreases, and it is preferable that the absolute value is smaller. m1 is preferably -2.0 or more, more preferably -1.8 or more, still more preferably -1.6 or more, and most preferably -1.5 or more. m1 is preferably -0.1 or less, more preferably -0.3 or less, still more preferably -0.5 or less, and most preferably -0.7 or less.

Although it is preferable that the capacity can be maintained at a high rate, the resistance becomes low, dendrite tends to precipitate on the electrode surface, and the battery life may be shortened.

In addition, a sharp decrease is not desirable even at m2. m2 is preferably -6.0 or more, more preferably -5.5 or more, still more preferably -5.2 or more, and most preferably -4.7 or more.

It is desirable that the battery can be used up to a higher rate, and a value calculated by the formula (16) is determined as an index thereof.

$$\text{Ratio of cross rate/m1} = \text{cross rate (C)/m1} \quad \text{Formula (16)}$$

FIG. 2 shows the relationship between the ratio of cross rate/m1 and the ratio of m2/m1 measured at 35°C shown in Examples and Comparative Examples to be described later. It can be seen that there is a good correlation between the two ratios.

(15-2) Temperature dependence index calculation method (A (each rate characteristic value), B (each rate characteristic value))

By changing the temperature to 3 levels or more, calculating m1, n1, m2, n2 at each temperature, and approximating each characteristic value (m1, etc.) with respect to the temperature by the formula (17), A and B are calculated.

$$Y = A\exp(B/T) \qquad \text{Formula (17)}$$

T represents the absolute temperature (K).

For example, the measured values for the temperature of m1 are represented by A (m1) and B (m1). The larger B is, the more easily the characteristics are affected by temperature. Further, the larger A is, the larger the characteristic value is likely to be.

(16) Insulation Breakdown Voltage

In the polyolefin microporous membrane of the present invention, the insulation breakdown voltage is preferably from 0.10 kV/$\mu$m to 0.30 kV/$\mu$m, more preferably from 0.11 kV/$\mu$m to 0.28 kV/$\mu$m, and particularly preferably from 0.12 kV/$\mu$m to 0.25 kV/$\mu$m. This is because when the insulation breakdown voltage of the polyolefin microporous membrane is within the above range, the durability and the voltage endurance of the battery can be expected to be good when the polyolefin microporous membrane is used as a battery separator.

The insulation breakdown voltage of the polyolefin microporous membrane of the present invention can be measured, for example, according to the method specified in JIS C2110 or ASTM D149.

(17)130°C, 150°C Thermal Shrinkage

In the polyolefin microporous membrane of the present invention, it is preferable that the sum of the thermal shrinkage in the longitudinal direction (MD) and the thermal shrinkage in the widthwise direction (TD) after being held at 150°C for 1 hour in the composite microporous membrane in which the heat-resistant layer composed of a resin as a binder and inorganic particles is formed is 6% or less. When the sum of the thermal shrinkage is within the above range, a battery having excellent thermal stability can be expected.

As the thickness of the heat-resistant layer increases, the thermal stability of the composite microporous membrane is improved. As the amount of inorganic substances increases, the weight increases, and the lightness, which is a characteristic of the polyolefin microporous membrane, may be impaired. In addition, since the manufacturing cost also increases, there is an upper limit of the thickness of the heat-resistant layer, and the thickness of the heat-resistant layer in the composite microporous membrane is preferably about 20% in order not to impair the characteristics of the polyolefin microporous membrane such as ion permeability. The heat-resistant layer for improving the thermal stability may be formed on one side or both sides of the polyolefin microporous membrane, but a value measured by forming a heat-resistant layer on one side is used as a thermal shrinkage after holding at 130°C or 150°C for one hour in the present specification.

When the heat-resistant layer is introduced so as to be about 20%, it is possible to suppress the thermal shrinkage after holding for one hour at 130°C, which is a temperature at which the polyolefin microporous membrane is unlikely to be completely melted. On the other hand, in order to ensure the safety of the battery at 150°C, it is necessary to lower the maximum shrinkage of the polyolefin microporous membrane (often generated at 140°C or more) along with the introduction of the heat-resistant layer. In the present application, in the polyolefin microporous membrane before the heat-resistant layer is formed, by setting the maximum shrinkage obtained from the TMA method represented by the formula (6) to 70% or less, it is possible to suppress the shrinkage after holding for one hour at 150°C in the composite microporous membrane in which the heat-resistant layer is formed. More preferably, it has been found that the thermal stability of the composite microporous membrane is greatly improved by setting the maximum shrinkage obtained from the TMA method to 60% or less.

(Battery Separator)

The battery separator of the present invention can be prepared by a known method using the polyolefin microporous membrane of the present invention.

The membrane thickness of the battery separator of the present invention is preferably from 3 $\mu$m to 30 $\mu$m from the viewpoints of mechanical strength and battery capacity. When the membrane thickness of the battery separator is within the above range, it is suitable for preparing a high-capacity battery, and bending due to its own weight is less likely to occur.

The width of the battery separator is not particularly limited, but is preferably 10 mm or more, more preferably 60 mm or more, still more preferably 100 mm or more. The width of the battery separator is preferably 2000 mm or less, more preferably 1000 mm or less, and further preferably 800 mm or less.

The length of the battery separator is preferably 500 m or more, more preferably 1000 m or more, still more preferably 2000 m or more. The length of the battery separator is preferably 10,000 m or less, more preferably 8000 m or less, and still more preferably 7000 m or less. When the length of the battery separator is within the above range, the productivity is improved, and when the battery separator is formed to be a wound body, bending is less likely to occur due to its own weight.

The battery separator is preferably stored in a dry state, but when it is difficult to store the battery separator in an absolute dry state, it is preferable to perform a vacuum drying treatment of 100°C or less immediately before use.

(Secondary Battery)

The secondary battery of the present invention can be produced by a known method using the battery separator of the present invention.

Examples of the secondary battery include, for example, a nickel-hydrogen battery, a nickel-cadmium battery, a nickel-zinc battery, a silver-zinc battery, a lithium ion secondary battery, and a lithium polymer secondary battery. Among these, a lithium ion secondary battery is preferable.

Hereinafter, a lithium ion secondary battery will be described as an example.

The lithium ion secondary battery contains an electrode body in which a positive electrode and a negative electrode are laminated via a separator, and an electrolytic solution (electrolyte). The structure of the electrode body is not particularly limited, and may be a known structure.

For example, a structure such as an electrode structure (coin type) in which a disc-shaped positive electrode and a disc-shaped negative electrode are opposed to each other, an electrode structure (laminated type) in which a flat plate-shaped positive electrode and a plate-shaped negative electrode are alternately laminated, and an electrode structure (a winding type) in which a strip-shaped positive electrode and a strip-shaped negative electrode are laminated and wound can be used.

[Examples]

The present invention is further described in detail using the examples below. However, the present invention is not limited to these examples.

(Manufacturing of Polyolefin microporous membrane)

[Example 1]

A polyethylene composition was prepared by dry-blending 100 parts by mass of an ultrahigh molecular weight polyethylene having a weight average molecular weight of $2.88 \times 10^6$, a molecular weight distribution of 18.4, and a melting point of 133°C with 0.375 parts by mass of tetrakis [methylene-3-(3,5-ditertiary butyl-4-hydroxyphenyl)-propionate] methane as an antioxidant.

12 parts by mass of the obtained polyethylene composition was added to a twin-screw extruder. Further, 88 parts by mass of liquid paraffin was supplied from a side feeder of the twin-screw extruder and melt-kneaded to prepare a polyethylene resin solution in the extruder.

Subsequently, a polyethylene resin solution was extruded from a die installed at the front end of the extruder at 210°C, and an unstretched gel-like sheet was formed while being pulled by a cooling roll in which the internal cooling water temperature was kept at 25°C. The cooled extruded product was first stretched in the MD direction by a roll. The stretching was performed at three stages (2.1 times/2.1 times/2.27 times, total 10 times) at preheating temperature/stretching temperature/heat-fixing temperature of 120°C/119°C/50°C. Stretching was performed by a tenter at a stretching ratio of 10 times in the TD direction, at preheating temperature/stretching temperature/heat-fixing temperature of 119°C/116°C/110°C.

At this time, the maximum stretching speed deviation was set to 2%. The stretched gel-like sheet was immersed in a methylene chloride bath of 25°C, and then dried by blowing air at 25°C. The dried polyolefin microporous membrane was subjected to a heat fixation treatment at 125°C for 40 seconds to form a final polyolefin microporous membrane.

[Example 2]

A polyethylene composition was prepared by dry-blending 100 parts by mass of an ultrahigh molecular weight polyethylene having a weight average molecular weight of $2.88 \times 10^6$, a molecular weight distribution of 18.4, and a melting point of 133°C with 0.375 parts by mass of tetrakis [methylene-3-(3,5-ditertiary butyl-4-hydroxyphenyl)-propionate] methane as an antioxidant.

10 parts by mass of the obtained polyethylene composition was added into the twin-screw extruder. Further, 90 parts by mass of liquid paraffin was supplied from a side feeder of the twin-screw extruder and melt-kneaded to prepare a polyethylene resin solution in the extruder.

Subsequently, a polyethylene resin solution was extruded from a die installed at the front end of the extruder at 210°C, and an unstretched gel-like sheet was formed while being pulled by a cooling roll in which the internal cooling water temperature was kept at 25°C. The cooled extruded product was first stretched in the MD direction by a roll. The stretching was performed at three stages (2.0 times/2.1 times/2.15 times, total 9 times) at a preheating temperature/stretching temperature/heat-fixing temperature of 116°C/113°C/50°C. The stretching was performed by a tenter at a stretching ratio of 9 times in the TD direction at a preheating temperature/stretching temperature/heat-fixing temperature of 115°C/117°C/110°C,.

At this time, the maximum stretching speed deviation was set to 2%. The stretched gel-like sheet was immersed in a methylene chloride bath of 25°C, and then dried by blowing air at 25°C. The dried polyolefin microporous membrane was stretched 1.12 times in the MD direction and 1.12 times in the MD direction by the tenter at 125°C in the TD direction, and was subjected to heat fixation treatment for 40 seconds to form a final polyolefin microporous membrane.

[Example 3]

A polyethylene composition was prepared by dry-blending 100 parts by mass of an ultrahigh molecular weight polyethylene having a weight average molecular weight of $2.88 \times 10^6$, a molecular weight distribution of 18.4, and a melting point of 133°C with 0.375 parts by mass of tetrakis [methylene-3-(3,5-ditertiary butyl-4-hydroxyphenyl)-propionate] methane as an antioxidant to prepare.

11 parts by mass of the obtained polyethylene composition was added into the twin-screw extruder. Further, 89 parts by mass of liquid paraffin was supplied from a side feeder of the twin-screw extruder and melt-kneaded to prepare a polyethylene resin solution in the extruder.

Subsequently, a polyethylene resin solution was extruded from a die installed at the front end of the extruder at 210°C, and an unstretched gel-like sheet was formed while being pulled by a cooling roll in which the internal cooling water temperature was kept at 25°C. Simultaneous biaxial stretching was performed on the cooled gel-like sheet at a preheating temperature/stretching temperature/heat-fixing temperature of 116°C/114°C/110°C and a strain rate of 1000 mm/min so as to be 10 times in the MD direction and 10 times in the TD direction.

The stretched gel-like sheet was immersed in a methylene chloride bath of 25°C, and then dried by blowing air at 25°C. The dried polyolefin microporous membrane was subjected to a heat fixation treatment at 124°C for 40 seconds to form a final polyolefin microporous membrane.

[Examples 4 to 9 and Comparative Examples 1 to 13]

The resin composition, the stretching conditions, and the like were changed to the conditions described in Tables 1 to 5, and a polyolefin microporous membrane was obtained according to the methods described in Examples 1 to 3.

The weight average molecular weight, molecular weight distribution, and melting point of the polyethylene resin used were measured as follows.

(Weight Average Molecular Weight/Molecular Weight Distribution Measurement)

The weight average molecular weight of the polyethylene resin used was determined by gel permeation chromatography (GPC) method under the following conditions.

- Measuring apparatus: high-temperature GPC device PL-GPC220 manufactured by Agilent
- Column: PL 1110-6200 (20 μm MIXED-A) × 2 columns manufactured by Agilent
- Column temperature: 160°C
- Solvent (mobile phase): 1,2,4-trichlorobenzene

- Solvent flow rate: 1.0 mL/min
- Sample concentration: 0.1 wt% (dissolution condition: 160°C/3.5H)
- Injection amount: 500 μL
- Detector: differential refractive index detector manufactured by Agilent (RI detector)
- Viscometer: viscosity detector manufactured by Agilent
- Calibration curve: created by a universal calibration curve method using a monodisperse polystyrene standard sample.

(Melting Point)

The polyethylene resin was sealed in a measurement pan, and heated to 230°C using PYRIS DIAMOND DSC manufactured by PARKING ELMER to be completely melted, and then held at 230°C for 3 minutes, and cooled to 30°C at a rate of 10°C/min.

Specifically, the temperature was raised from 30°C to 230°C at a rate of 10°C/min, held at 230°C for 3 minutes, and cooled to 30°C at a rate of 10°C/min. This is regarded as the first temperature rise, and the same measurement was repeated further twice, and the melting point was determined from the endothermic peak at the time of temperature rise.

[Table 1]

| | | | Example 1 | Example 2 | Example 3 | Example 4 |
|---|---|---|---|---|---|---|
| Resin Composition | 1 | Weight Average Molecular Weight | 2880000 | 2880000 | 2880000 | 2880000 |
| | | f1 (%) | 30 | 30 | 30 | 30 |
| | | Molecular Weight Distribution | 18.4 | 18.4 | 18.4 | 18.4 |
| | | Melting Point (°C) | 133 | 133 | 133 | 133 |
| | | Content (%) | 100 | 100 | 100 | 100 |
| | 2 | Weight Average Molecular Weight | - | - | - | - |
| | | f2 (%) | - | - | - | - |
| | | Molecular Weight Distribution | - | - | - | - |
| | | Melting Point (°C) | - | - | - | - |
| | | Content (%) | - | - | - | - |
| | | Solid Content Concentration (%) | 12 | 10 | 11 | 10 |
| Simultaneous Stretching Conditions | Simultaneous Biaxial Stretching | Pre-heating Temperature (°C) | - | - | 116 | 115 |
| | | Stretching Temperature (°C) | - | - | 114 | 115 |
| | | Heat-fixing Temperature (°C) | - | - | 110 | 115 |
| | | Ratio (times) | - | - | 10 × 10 | 10 × 10 |

(continued)

| | | | Example 1 | Example 2 | Example 3 | Example 4 |
|---|---|---|---|---|---|---|
| Sequential Stretching Conditions | MDO | Pre-heating Temperature (°C) | 120 | 116 | - | - |
| | | Stretching Temperature (°C) | 119 | 113 | - | - |
| | | Heat-fixing Temperature (°C) | 50 | 50 | - | - |
| | | Ratio (times) | 10.0 | 9.0 | - | - |
| | | | $2.1 \times 2.1 \times 2.27$ | $2.0 \times 2.1 \times 2.15$ | - | - |
| | TDO | Pre-heating Temperature (°C) | 119 | 115 | - | - |
| | | Stretching Temperature (°C) | 116 | 117 | - | - |
| | | Heat-fixing Temperature (°C) | 110 | 110 | - | - |
| | | Ratio (times) | 10.0 | 9.0 | - | - |
| | Maximum Deformation Speed Deviation (%) | | 2 | 2 | - | - |
| Dry Stretching Conditions | MDDO | Pre-heating Temperature (°C) | - | 125 | - | - |
| | | Stretching Temperature (°C) | - | 125 | - | - |
| | | Heat-fixing Temperature (°C) | - | 125 | - | - |
| | | Ratio (times) | - | 1.12 | - | - |
| | TDDO | Pre-heating Temperature (°C) | - | 125 | - | - |
| | | Stretching Temperature (°C) | - | 125 | - | - |
| | | Heat-fixing Temperature (°C) | - | 125 | - | - |
| | | Ratio (times) | - | 1.12 | - | - |
| Heat Treatment | | Temperature (°C) | 125 | - | 124 | 125 |
| | | Ratio (times) | 1.0 | - | 1.0 | 1.0 |
| Microporous Membrane after Membrane-formation f3 (%) | | | 28.0 | 27.5 | 27.7 | 28.3 |

[Table 2]

| | | | Example 5 | Example 6 | Example 7 | Example 8 | Example 9 |
|---|---|---|---|---|---|---|---|
| Resin Composition | 1 | Weight Average Molecular Weight | 2880000 | 2880000 | 2880000 | 2880000 | 2880000 |
| | | f1 (%) | 30 | 30 | 30 | 30 | 30 |
| | | Molecular Weight Distribution | 18.4 | 18.4 | 18.4 | 18.4 | 18.4 |
| | | Melting Point (°C) | 133 | 133 | 133 | 133 | 133 |
| | | Content (%) | 100 | 100 | 100 | 100 | 40 |
| | 2 | Weight Average Molecular Weight | - | - | - | - | 570000 |
| | | f2 (%) | - | - | - | - | 4.8 |
| | | Molecular Weight Distribution | - | - | - | - | 5.7 |
| | | Melting Point (°C) | - | - | - | - | 135 |
| | | Content (%) | - | - | - | - | 60 |
| | Solid Content Concentration (%) | | 12 | 12 | 10 | 10 | 25 |
| Simultaneous Stretching Conditions | Simultaneous Biaxial Stretching | Pre-heating Temperature (°C) | - | - | 115 | 115 | 110 |
| | | Stretching Temperature (°C) | - | - | 115 | 115 | 110 |
| | | Heat-fixing Temperature (°C) | - | - | 110 | 110 | 100 |
| | | Ratio (times) | - | - | $10 \times 10$ | $10 \times 10$ | $5 \times 5$ |

(continued)

| | | | Example 5 | Example 6 | Example 7 | Example 8 | Example 9 |
|---|---|---|---|---|---|---|---|
| Sequential Stretching Conditions | MDO | Pre-heating Temperature (°C) | 120 | 120 | - | - | - |
| | | Stretching Temperature (°C) | 118 | 115 | - | - | - |
| | | Heat-fixing Temperature (°C) | 50 | 50 | - | - | - |
| | | Ratio (times) | 5.0 | 7.0 | - | - | - |
| | | | 1.70 × 1.70 × 1.73 | 1.80 × 1.95 × 2.00 | - | - | - |
| | TDO | Pre-heating Temperature (°C) | 115 | 119 | - | - | - |
| | | Stretching Temperature (°C) | 115 | 118 | - | - | - |
| | | Heat-fixing Temperature (°C) | 110 | 110 | - | - | - |
| | | Ratio (times) | 5.0 | 7.0 | - | - | - |
| | Maximum Deformation Speed Deviation (%) | | 2 | 2 | - | - | - |

(continued)

| | | | Example 5 | Example 6 | Example 7 | Example 8 | Example 9 |
|---|---|---|---|---|---|---|---|
| Dry Stretching Conditions | MDDO | Pre-heating Temperature (°C) | - | - | 125 | 125 | 100 |
| | | Stretching Temperature (°C) | - | - | 125 | 125 | 100 |
| | | Heat-fixing Temperature (°C) | - | - | 125 | 125 | 100 |
| | | Ratio (times) | - | - | 1.25 | 1.25 | 1.7 |
| | TDDO | Pre-heating Temperature (°C) | - | - | 125 | 125 | 133 |
| | | Stretching Temperature (°C) | - | - | 125 | 125 | 133 |
| | | Heat-fixing Temperature (°C) | - | - | 125 | 125 | 133 |
| | | Ratio (times) | - | - | 1.25 | 1.39 to 1.25 | 2.2 to 2.0 |
| Heat Treatment | | Temperature (°C) | 125 | 125 | - | - | - |
| | | Ratio (times) | 1.0 | 1.0 | - | - | - |
| Microporous Membrane after Membrane-formation f3 (%) | | | 27.9 | 27.8 | 27.7 | 29.1 | 19.2 |

[Table 3]

| | | | Comp. Ex. 1 | Comp. Ex. 2 | Comp. Ex. 3 | Comp. Ex. 4 |
|---|---|---|---|---|---|---|
| Resin Composition | 1 | Weight Average Molecular Weight | 2880000 | - | - | - |
| | | f1 (%) | 30 | - | - | - |
| | | Molecular Weight Distribution | 18.4 | - | - | - |
| | | Melting Point (°C) | 133 | - | - | - |
| | | Content (%) | 40 | - | - | - |
| | 2 | Weight Average Molecular Weight | 570000 | 570000 | 570000 | 570000 |
| | | f2 (%) | 4.8 | 4.8 | 4.8 | 4.8 |
| | | Molecular Weight Distribution | 5.7 | 5.7 | 5.7 | 5.7 |
| | | Melting Point (°C) | 135 | 135 | 135 | 135 |
| | | Content (%) | 60 | 100 | 100 | 100 |
| | Solid Content Concentration (%) | | 25 | 25 | 30 | 20 |
| Simultaneous Stretching Conditions | Simultaneous Biaxial Stretching | Pre-heating Temperature (°C) | 106 | 117 | 115 | - |
| | | Stretching Temperature (°C) | 106 | 114 | 115 | - |
| | | Heat-fixing Temperature (°C) | 110 | 110 | 115 | - |
| | | Ratio (times) | $5 \times 5$ | $5 \times 5$ | $5 \times 5$ | - |
| Sequential Stretching Conditions | MDO | Pre-heating Temperature (°C) | - | - | - | 120 |
| | | Stretching Temperature (°C) | - | - | - | 115 |
| | | Heat-fixing Temperature (°C) | - | - | - | 50 |
| | | Ratio (times) | - | - | - | 7.0 |
| | | | - | - | - | $1.80 \times 1.95 \times 2.00$ |
| | TDO | Pre-heating Temperature (°C) | - | - | - | 115 |
| | | Stretching Temperature (°C) | - | - | - | 115 |
| | | Heat-fixing Temperature (°C) | - | - | - | 110 |
| | | Ratio (times) | - | - | - | 7.0 |
| | Maximum Deformation Speed Deviation (%) | | - | - | - | 2 |

(continued)

|  |  |  | Comp. Ex. 1 | Comp. Ex. 2 | Comp. Ex. 3 | Comp. Ex. 4 |
|---|---|---|---|---|---|---|
| Dry Stretching Conditions | MDDO | Pre-heating Temperature (°C) | - | - | - | - |
|  |  | Stretching Temperature (°C) | - | - | - | - |
|  |  | Heat-fixing Temperature (°C) | - | - | - | - |
|  |  | Ratio (times) | - | - | - | - |
|  | TDDO | Pre-heating Temperature (°C) | 127 | - | - | - |
|  |  | Stretching Temperature (°C) | 127 | - | - | - |
|  |  | Heat-fixing Temperature (°C) | 125 | - | - | - |
|  |  | Ratio (times) | 1.4 to 1.3 | - | - | - |
| Heat Treatment |  | Temperature (°C) | - | 125 | 125 | 125 |
|  |  | Ratio (times) | - | 1.0 | 1.0 | 1.0 |
| Microporous Membrane after Membrane-formation f3 (%) |  |  | 19.4 | 4.5 | 4.7 | 4.6 |

[Table 4]

|  |  |  | Comp. Ex. 5 | Comp. Ex. 6 | Comp. Ex. 7 | Comp. Ex. 8 |
|---|---|---|---|---|---|---|
| Resin Composition | 1 | Weight Average Molecular Weight | 2880000 | - | - | 1410000 |
|  |  | f1 (%) | 30 | - | - | 16 |
|  |  | Molecular Weight Distribution | 18.4 | - | - | 7.5 |
|  |  | Melting Point (°C) | 133 | - | - | 133 |
|  |  | Content (%) | 30 | - | - | 100 |
|  | 2 | Weight Average Molecular Weight | 570000 | 570000 | 570000 | - |
|  |  | f2 (%) | 4.8 | 4.8 | 4.8 | - |
|  |  | Molecular Weight Distribution | 5.7 | 5.7 | 5.7 | - |
|  |  | Melting Point (°C) | 135 | 135 | 135 | - |
|  |  | Content (%) | 70 | 100 | 100 | - |
| Solid Content Concentration (%) |  |  | 29 | 25 | 35 | 17 |

(continued)

| | | | Comp. Ex. 5 | Comp. Ex. 6 | Comp. Ex. 7 | Comp. Ex. 8 |
|---|---|---|---|---|---|---|
| Simultaneous Stretching Conditions | Simultaneous Biaxial Stretching | Pre-heating Temperature (°C) | 117 | 115 | 115 | 115 |
| | | Stretching Temperature (°C) | 117 | 115 | 115 | 115 |
| | | Heat-fixing Temperature (°C) | 110 | 115 | 115 | 115 |
| | | Ratio (times) | 5 × 5 | 5 × 5 | 10 × 10 | 5 × 5 |
| Sequential Stretching Conditions | MDO | Pre-heating Temperature (°C) | - | - | - | - |
| | | Stretching Temperature (°C) | - | - | - | - |
| | | Heat-fixing Temperature (°C) | - | - | - | - |
| | | Ratio (times) | - | - | - | - |
| | TDO | Pre-heating Temperature (°C) | - | - | - | - |
| | | Stretching Temperature (°C) | - | - | - | - |
| | | Heat-fixing Temperature (°C) | - | - | - | - |
| | | Ratio (times) | - | - | - | - |
| | Maximum Deformation Speed Deviation (%) | | - | - | - | - |
| Dry Stretching Conditions | MDDO | Pre-heating Temperature (°C) | - | 125 | - | - |
| | | Stretching Temperature (°C) | - | 125 | - | - |
| | | Heat-fixing Temperature (°C) | - | 125 | - | - |
| | | Ratio (times) | - | 2 | - | - |
| | TDDO | Pre-heating Temperature (°C) | - | 125 | - | - |
| | | Stretching Temperature (°C) | - | 125 | - | - |
| | | Heat-fixing Temperature (°C) | - | 125 | - | - |
| | | Ratio (times) | - | 2 | - | - |
| Heat Treatment | | Temperature (°C) | 127 | 125 | 125 | 125 |
| | | Ratio (times) | 1.0 | 1.0 | 1.0 | 1.0 |
| Microporous Membrane after Membrane-formation f3 (%) | | | 16.5 | 4.4 | 4.7 | 15.6 |

[Table 5]

| | | | Comp. Ex. 9 | Comp. Ex. 10 | Comp. Ex. 11 | Comp. Ex. 12 | Comp. Ex. 13 |
|---|---|---|---|---|---|---|---|
| Resin Composition | 1 | Weight Average Molecular Weight | 2880000 | 2880000 | 2880000 | 2880000 | 1410000 |
| | | f1 (%) | 30 | 30 | 30 | 30 | 16 |
| | | Molecular Weight Distribution | 18.4 | 18.4 | 18.4 | 18.4 | 7.5 |
| | | Melting Point (°C) | 133 | 133 | 133 | 133 | 133 |
| | | Content (%) | 20 | 100 | 18 | 70 | 100 |
| | 2 | Weight Average Molecular Weight | 570000 | - | 570000 | 570000 | - |
| | | f2 (%) | 4.8 | - | 4.8 | 4.8 | - |
| | | Molecular Weight Distribution | 5.7 | - | 5.7 | 5.7 | - |
| | | Melting Point (°C) | 135 | - | 135 | 135 | - |
| | | Content (%) | 80 | - | 82 | 30 | - |
| | Solid Content Concentration (%) | | 30 | 10 | 30 | 14 | 20 |
| Simultaneous Stretching Conditions | Simultaneous Biaxial Stretching | Pre-heating Temperature (°C) | - | 115 | 116 | - | - |
| | | Stretching Temperature (°C) | - | 115 | 116 | - | - |
| | | Heat-fixing Temperature (°C) | - | 115 | 110 | - | - |
| | | Ratio (times) | - | 5 × 5 | 5 × 5 | - | - |

(continued)

| | | | Comp. Ex. 9 | Comp. Ex. 10 | Comp. Ex. 11 | Comp. Ex. 12 | Comp. Ex. 13 |
|---|---|---|---|---|---|---|---|
| Sequential Stretching Conditions | MDO | Pre-heating Temperature (°C) | 117 | - | - | 120 | 118 |
| | | Stretching Temperature (°C) | 118 | - | - | 115 | 115 |
| | | Heat-fixing Temperature (°C) | 50 | - | - | 50 | 50 |
| | | Ratio (times) | 6.5 | - | - | 5.0 | 8.0 |
| | | | 1.87 × | | | 1.70 × | 1.80 × |
| | | | 1.87 × | - | - | 1.70 × | 1.90 × |
| | | | 1.87 | | | 1.73 | 2.35 |
| | TDO | Pre-heating Temperature (°C) | 117 | - | - | 116 | 116 |
| | | Stretching Temperature (°C) | 116 | - | - | 113 | 117 |
| | | Heat-fixing Temperature (°C) | 80 | - | - | 110 | 110 |
| | | Ratio (times) | 7.7 | - | - | 5.0 | 8.0 |
| | Maximum Deformation Speed Deviation (%) | | 2 | - | - | 2 | 2 |

(continued)

| | | | Comp. Ex. 9 | Comp. Ex. 10 | Comp. Ex. 11 | Comp. Ex. 12 | Comp. Ex. 13 |
|---|---|---|---|---|---|---|---|
| Dry Stretching Conditions | MDDO | Pre-heating Temperature (°C) | - | 125 | - | - | - |
| | | Stretching Temperature (°C) | - | 125 | - | - | - |
| | | Heat-fixing Temperature (°C) | - | 100 | - | - | - |
| | | Ratio (times) | - | 2 | - | - | - |
| | TDDO | Pre-heating Temperature (°C) | 132 | 125 | 130 | - | - |
| | | Stretching Temperature (°C) | 132 | 125 | 130 | - | - |
| | | Heat-fixing Temperature (°C) | 125 | 100 | 130 | - | - |
| | | Ratio (times) | 1.55 to 1.5 | 2.1 to 2.0 | 1.4 to 1.3 | - | - |
| Heat Treatment | | Temperature (°C) | - | - | - | 125 | 125 |
| | | Ratio (times) | - | - | - | 1.0 | 1.0 |
| Microporous Membrane after Membrane-formation f3 (%) | | | 10.9 | 4.5 | 10.8 | 25.5 | 15.4 |

In Tables 1 to 5, f1, f2, and f3 mean the amount of the ultrahigh molecular weight component (mass%) having a molecular weight of 2.33 million or more.

In Tables 1 to 5, MDO means sequential stretching in the MD direction, TDO means sequential stretching in the TD direction, MDDO means dry stretching in the MD direction, and TDDO means dry stretching in the TD direction.

[Physical Properties]

The physical properties of the polyolefin microporous membrane obtained above were measured by the following method. The results are shown in Tables 6 to 11.

(1) Membrane thickness (μm)

The membrane thicknesses of 5 points were measured within a range of 95 mm × 95 mm of the polyolefin microporous membrane by a contact thickness meter (LITEMATIC manufactured by Mitutoyo Corporation), and an average value of the membrane thicknesses was determined.

(2) Air permeability (sec/100cm$^3$)

The air permeability (Gurley value) was measured in accordance with JIS P8117: 2009.
In the present invention, the gas used for measuring the air permeability is air.

(3) Porosity (%)

The porosity was calculated by the porosity (%) = [(w2 - w1)/w2] × 100 from the mass w1 of the polyolefin microporous membrane and the mass w2 of a membrane without pores having the same size and formed of the same polyolefin composition as the polyolefin microporous membrane.

(4) Puncture strength (mN) and puncture strength in terms of membrane thickness of 10 μm (mN/10 μm)

As the puncture strength, a needle having a diameter of 1 mm (front end: 0.5 mmR) was used, and the maximum load value (P1) when the polyolefin microporous membrane was pierced at a speed of 2 mm/sec was measured.
The puncture strength (P2) in terms of the membrane thickness of 10 μm was determined by converting P2 = (P1 × 10)/T1 in the membrane thickness T1 (μm).

(5) Tensile Strength (MPa) and Average Tensile Strength (MPa)

The tensile strength was measured by ASTM D882 using a strip-shaped test piece having a width of 10 mm. The average tensile strength (MPa) obtained by averaging the tensile strength in the MD and the tensile strength in the TD direction (TMD, TTD) was determined by the following formula.

$$\text{Average tensile strength (MPa)} = (\text{TMD} \times \text{TTD})^{0.5}$$

(6) Tensile Elongation (%) and Average Tensile Elongation (%)

The tensile elongation was determined by taking three points from the center portion of the polyolefin microporous membrane in the width direction on the strip-shaped test piece having a width of 10 mm, and calculating the average value of the measurement results measured by ASTM D882 for each point. The average tensile elongation (%) obtained by averaging the tensile elongation (EMD, ETD) in the MD and TD directions was determined by the following formula.

$$\text{Average tensile elongation (\%)} = (\text{EMD} \times \text{ETD})^{0.5}$$

(7) Maximum Shrinkage

The temperature was raised and scanned using a thermomechanical analyzer (TMA/SS6100 manufactured by Hitachi High-Tech Science Corporation) to measure the shrinkage behavior.
The measurement conditions were: sample shape: width 3 mm × length 10 mm, load: 19.6 mN (membrane thickness of 10 μm or more)/9.8 mN (membrane thickness less than 10 μm), temperature scanning range: 30°C to 210°C, temperature rise rate 10°C/min. The measurement was performed by sampling such that each direction of MD and TD is in the length direction. In the range of 110°C or more and 160°C or less, a portion exhibiting the highest shrinkage was selected, and the shrinkage was calculated. When the length was not shorter than the sample length (did not shrink), the shrinkage was set to 0%. The above measurements were performed at three different points in the same polyolefin microporous membrane for each of MD and TD.

(8) Maximum Pore Diameter and Average Pore Diameter (nm)

The maximum pore diameter and the average pore diameter were measured in the order of Dry-up and Wet-up using perm porometer (CFP-1500A, manufactured by PMI).
In Wet-up, a pressure was applied to the polyolefin microporous membrane sufficiently immersed in Galwick (trade name) manufactured by PMI having a known surface tension, and the pore diameter converted from the pressure at which air began to penetrate the polyolefin microporous membrane was defined as the maximum pore diameter.
Regarding the average pore diameter, the pore diameter was converted from the pressure at the intersection of a curve showing the slope of 1/2 of the pressure and flow rate curve in Dry-up measurement and the curve in Wet-up measurement. For the conversion of the pressure and the pore diameter, the following formula (18) was used.

$$d = C \cdot \gamma / P \quad \text{Formula (18)}$$

In the above formula, "d ($\mu$m)" represents a pore diameter of a polyolefin microporous membrane, "$\gamma$ (mN/m)" represents the surface tension of a liquid, "P (Pa)" represents the pressure, and "C" represents a constant.

The ratio (BP/AP) of the maximum pore diameter (BP) to the average pore diameter (AP) and the difference (BP-AP) between BP and AP were calculated.

(9) Toughness (MPa%)

The toughness was calculated from the above formula (4).

(10) Average Number of Pores (/$\mu$m$^3$)

The average number of pores was calculated from the above formula (1).

(11) Value of Toughness $\times$ Average Number of Pores (kMPa%/$\mu$m$^3$)

The value of the toughness $\times$ the average number of pores was calculated from the above formula (12).

(12) Relationship Between Toughness and Average Number of Pores

The value of 160 - 2.3 $\times$ 10$^{-3}$ $\times$ Toughness was calculated.

In addition, the case where the average number of pores $\geq$ 160 - 2.3 $\times$ 10$^{-3}$ $\times$ the toughness Formula (5) is satisfied is acceptable, and the case where the formula (5) is not satisfied is unacceptable.

[Battery Evaluation]

In order to evaluate the rate characteristics of the polyolefin microporous membrane, a charge/discharge test was performed by incorporating the polyolefin microporous membrane as a separator in a non-aqueous electrolyte secondary battery including a positive electrode, a negative electrode, a separator, and an electrolyte.

A cathode obtained by laminating an NMC 532 on an aluminum foil having a width of 38 mm, a length of 33 mm, and a thickness of 20 $\mu$m at a basis weight of 9.5 mg/cm$^2$, and an anode obtained by laminating natural graphite having a density of 1.45 g/cm$^3$ on a copper foil having a width of 40 mm, a length of 35 mm, and a thickness of 10 $\mu$m at a unit area mass of 5.5 mg/cm$^2$ were used. The positive electrode and the negative electrode were dried in a vacuum oven at 120°C and used. A polyolefin microporous membrane having a length of 50 mm and a width of 50 mm was dried in a vacuum oven at room temperature and used as the separator. The electrolytic solution was prepared by dissolving 0.5 mass% of vinylene carbonate (VC) and 1 mol/L of LiPF6 in a mixture of ethylene carbonate, ethyl methyl carbonate, and dimethyl carbonate (volume ratio: 30/35/35).

The positive electrode, the separator, and the negative electrode were stacked, and the obtained laminate was disposed in a laminate pouch. An electrolytic solution was injected into the laminate pouch, and the laminate pouch was vacuum-sealed, thereby producing a nonaqueous electrolyte secondary battery.

The prepared nonaqueous electrolyte secondary battery was initially charged at a temperature of 35°C and 0.1C by 10% to 15%, and left at 35°C overnight (12 hours or longer) to perform degassing. Next, constant current-constant voltage (CC-CV) charging (termination current condition: 0.02C) with a charging current value of 0.1C, which was performed at a temperature of 35°C and a voltage range of 2.75V to 4.2 V, and constant current (CC) discharging with a discharging current value of 0.1C were performed.

Next, a time point at which three cycles of CC-CV charging (termination current condition: 0.05C) with a charging current value of 0.2C, which was performed at a temperature of 35°C and a voltage range of 2.75V to 4.2 V, and CC discharging with a discharging current value of 0.2C were performed was defined as an initial stage of the nonaqueous electrolyte secondary battery.

Next, CC-CV charging (termination current condition: 0.05C) with a charging current value of 0.2C, which was performed at a temperature of 35°C and a voltage range of 2.75V to 4.2 V, and CC discharging with a discharging current value of 0.2C were performed, and the discharging capacity at that time was defined as 0.2C capacity.

Next, after CC-CV charging (termination current condition: 0.05C) with a voltage range of 2.75V to 4.2V and a charging current value of 0.5C at a temperature of 35°C, the rate test of the non-aqueous electrolyte secondary battery was performed by changing the discharge rate at the following temperature. The temperatures were 0°C (low temperature), 15°C, and 35°C (room temperature), respectively. Three levels or more of the discharge rate were selected between 1C (18 mA, 1.44 mA/cm$^2$) and 20C at each temperature, and the evaluation is performed.

The evaluation results are shown in Tables 6 to 11.

The capacity retention rate, m1 (primary degradation region coefficient), m2 (secondary degradation region coefficient), and cross rate were obtained according to the analysis method in the battery output test described above.

[Evaluation of Insulation Properties]

A polyolefin microporous membrane cut into a circular shape having a diameter of 60 mm was placed on a square aluminum plate having a side of 150 mm, and a cylindrical electrode made of brass having a diameter of 50 mm, a height of 30 mm, and a weight of 500 g was placed on the polyolefin microporous membrane, and a TOS5051A insulation breakdown resistance tester manufactured by Kikusui Electronics Co., Ltd. was connected. A voltage was applied at a voltage rise rate of 0.2 kV/s, and the value V1 at the time of insulation breakdown was read. The insulation breakdown voltage was measured 15 times, and the maximum value, the average value, and the minimum value were obtained.
When the average value of the insulation breakdown voltages was less than 0.3 kV, it is evaluated as "below the standard", and when the average value was 0.3 or more and less than 1.0 kV, it is evaluated as "standard", and when the average value was 1.0 kV or more, it is evaluated as "good". The results are shown in Tables 6 to 11.

[Evaluation of Thermal Shrinkage after Holding at 130°C or 150°C for 1 Hour in Composite Microporous Membrane]

(Manufacturing of Composite Microporous Membrane)

For each of the polyolefin microporous membranes obtained in Examples and Comparative Examples, polyvinyl alcohol (average degree of polymerization: 1700, saponification degree: 99% or more), alumina particles having an average particle size of 0.5 $\mu$m, and ion-exchanged water were mixed at a weight ratio of 6: 54: 40, and the mixture was placed in a polypropylene container together with zirconium oxide beads ("Torayceram" (registered trademark) beads, diameter: 0.5 mm) manufactured by Toray Co., Ltd.), and dispersed in a paint shaker (manufactured by TOYO SEIKI Co., Ltd.) for 6 hours. Next, the mixture was filtered through a filter having a filtration limit of 5 $\mu$m to obtain a coating liquid (a).
The coating liquid (a) was applied to the surface of the polyethylene porous membrane which had been in contact with the cooling roll at the time of film formation by a gravure coating method, and dried by passing through a hot air drying furnace at 50°C for 10 seconds. In Example 1, a composite microporous membrane having a heat-resistant layer thickness of 2 $\mu$m was obtained. Also in Examples 2 to 9 and Comparative Examples 1 to 13, composite microporous membranes in which the thicknesses of the heat resistance layers of Comparative Examples were about 20% of the whole were obtained.

(Evaluation Method)

A composite microporous membrane having a square shape with a side of 50 mm was prepared, and the initial dimensions were measured. Thereafter, the composite microporous membrane was sandwiched between A4 size papers, put into an oven at a predetermined temperature, and taken out after 1 hour. After cooling to room temperature, the dimensions were measured, and the shrinkage in the MD direction and the TD direction was calculated according to the following formula (19).

$$\text{MD (or TD) shrinkage (\%)} = [(\text{dimension in MD (or TD) direction after treatment at a predetermined temperature for 1 hour})/(\text{dimension in MD (or TD) direction at the initial stage})] \times 100 \quad \text{Formula (19)}$$

At this time, when the sum of the MD shrinkage and the TD shrinkage was 80% or less and the composite microporous membrane maintained a film shape, it was expressed as acceptable, and when the sum was 10% or less, it was expressed as good, and when the sum was 4% or less, it was expressed as excellent.

[Table 6]

| | | | Ex. 1 | Ex. 2 | Ex. 3 | Comp. Ex. 1 | Comp. Ex. 2 | Comp. Ex. 13 |
|---|---|---|---|---|---|---|---|---|
| Physical Properties of Membrane | Membrane thickness ($\mu$m) | | 6.7 | 6.0 | 6.4 | 6.9 | 7.3 | 6.2 |
| | Air Permeability (sec/100cm$^3$) | | 98 | 76 | 105 | 90 | 98 | 91 |
| | Porosity (%) | | 48.7 | 46.5 | 47.7 | 43.6 | 45.1 | 44.6 |
| | Average Tensile Strength (MPa) MD/TD | | 262/292 | 214/264 | 283/262 | 162/191 | 59/61 | 253/259 |
| | Average Tensile Elongation (%) MD/TD | | 61/57 | 73/59 | 70/82 | 130/140 | 47.8/50. 7 | 58/70 |
| | Toughness (MPa%) | | 32657 | 31205 | 41380 | 42365 | 5893 | 32804 |
| | Maximum Pore Diameter (nm) | | 32.1 | 35.5 | 29.7 | 49.3 | 51.7 | 38.6 |
| | Average Pore Diameter (nm) | | 22 | 25.5 | 22.4 | 36.8 | 27.8 | 29.6 |
| | Average Number of Pores ($\mu$m$^3$) | | 130.7 | 106 | 122 | 35.2 | 67.1 | 64 |
| | Value of Toughness $\times$ Average Number of Pores (kMPa%/$\mu$m$^3$) | | 4268 | 3308 | 5048 | 1491 | 395 | 2099 |
| Battery Evaluation at Low Temperature | m1 | A | -0.0006 | -0.0006 | -0.0003 | -0.0036 | -0.00024 | -0.0005 |
| | | B | 2390 | 2391 | 2653 | 1913 | 2016 | 2514 |
| | n1 | A | 239.1 | 238.1 | 219.4 | 334.5 | 286.7 | 260 |
| | | B | -277 | -276 | -253 | -369 | -323 | -281 |
| | m2 | A | -0.0306 | -0.0342 | -0.0174 | -0.0036 | -0.0451 | -0.011 |
| | | B | 1427 | 1394 | 1604 | 1913 | 1376 | 1747 |
| | n2 | A | 852 | 876 | 810 | 320 | 1008 | 535 |
| | | B | -590 | -597 | -577 | -306 | -618 | -448 |
| | m1 (0°C) | | -3.75 | -3.7 | -4.3 | -4.25 | -4.1 | -4.15 |
| | m2 (0°C) | | -5.6 | -5.6 | -6.2 | -6.8 | -6.8 | -7.1 |
| | m2/m1 (0°C) | | 1.49 | 1.51 | 1.44 | 1.60 | 1.66 | 1.71 |
| | Capacity Retention Rate at 10C (%) | | 40.5 | 41.3 | 37.1 | 32.7 | 34.3 | 34.8 |
| Insulation Evaluation | Insulation Breakdown Voltage (kV) | | Standard | Good | Good | Standard | Below Standard | Good |

[Table 7]

| | | Example 1 | Example 2 | Example 4 | Example 5 |
|---|---|---|---|---|---|
| Physical Properties of Membrane | Membrane thickness ($\mu$m) | 6.7 | 6.0 | 4.5 | 10.4 |
| | Air Permeability (sec/100cm$^3$) | 98 | 76 | 71 | 179 |
| | Porosity (%) | 48.7 | 46.5 | 44.3 | 44.2 |
| | Puncture Strength in terms of Membrane thickness of 10 $\mu$m (mN) | 6310 | 4630 | 5530 | 3030 |
| | Average Tensile Strength (MPa) MD/TD | 262/292 | 214/264 | 276/255 | 136/157 |
| | Average Tensile Elongation (%) MD/TD | 61/57 | 73/59 | 76/76 | 133/151 |
| | Toughness (kMPa%) | 32657 | 31205 | 40241 | 41651 |
| | BP/AP | 1.5 | 1.4 | 1.4 | 2.0 |
| | BP-AP | 10 | 10 | 9 | 20 |
| | Maximum Pore Diameter (nm) | 32.1 | 35.5 | 33.3 | 41.3 |
| | Average Pore Diameter (nm) | 22 | 25.5 | 24.1 | 21.1 |
| | Average Number of Pores (/$\mu$m$^3$) | 130.7 | 106 | 142 | 82.1 |
| | Maximum Shrinkage (%) MD + TD (MD/TD) | 80 (40/40) | 48.7 (14.9/33.8) | 35.3 (19.9/15.4) | 13.7 (4.8/8.9) |
| | 160 - 2.3 $\times$ 10$^{-3}$ $\times$ Toughness (Calculation Value) | Acceptable (85) | Acceptable (88) | Acceptable (67) | Acceptable (64) |
| | Value of Toughness $\times$ Average Number of Pores (kMPa% /$\mu$m$^3$) | 4268 | 3308 | 5714 | 3420 |
| Battery Evaluation at 35°C | Capacity Retention Rate at 15C (%) | 77.3 | 77.7 | 76.7 | 68.3 |
| | m1 | -1.38 | -1.36 | -1.38 | -1.45 |
| | m2 | -3.12 | -3.12 | -2.89 | -4.7 |
| | Cross Rate (C) | 15 | 15 | 15.4 | 13.2 |
| | m2/m1 | 2.26 | 2.29 | 2.09 | 3.24 |
| | Cross Rate/m1 | -10.9 | -11.0 | -11.2 | -9.1 |
| Insulation Properties Evaluation | Insulation Breakdown Voltage (kV) | Standard | Good | Good | Good |
| Thermal Stability Test | CCS Thermal Shrinkage after Holding at 130°C for 1 hour | Good | Good | Good | Good |
| Thermal Stability Test | CCS Thermal Shrinkage after Holding at 150°C for 1 hour | Acceptable | Good | Excellent | Excellent |

[Table 8]

|  |  | Example 6 | Example 7 | Example 8 | Example 9 |
|---|---|---|---|---|---|
| Physical Properties of Membrane | Membrane thickness ($\mu$m) | 12.0 | 3.6 | 3.7 | 4.9 |
|  | Air Permeability (sec/100cm$^3$) | 149 | 85 | 91 | 160 |
|  | Porosity (%) | 49.9 | 39.5 | 39.3 | 30.5 |
|  | Puncture Strength in terms of Membrane thickness of 10 $\mu$m (mN) | 3710 | 7030 | 6910 | 6650 |
|  | Average Tensile Strength (MPa) MD/TD | 181/199 | 359/339 | 363/371 | 387/280 |
|  | Average Tensile Elongation (%) MD/TD | 103/123 | 54/62 | 58/66 | 91/133 |
|  | Toughness (kMPa%) | 43051 | 40488 | 45491 | 72403 |
|  | BP/AP | 1.7 | 1.2 | 1.3 | 1.4 |
|  | BP-AP | 17 | 6 | 7 | 13 |
|  | Maximum Pore Diameter (nm) | 40.3 | 29.4 | 32.1 | 42.2 |
|  | Average Pore Diameter (nm) | 23.1 | 23.7 | 25.2 | 29.5 |
|  | Average Number of Pores (/$\mu$m$^3$) | 71 | 143 | 116.8 | 45.6 |
|  | Maximum Shrinkage (%) MD + TD (MD/TD) | 43 (11.6/31.4) | 50.3 (26.5/23.8) | 32.8 (15.9/16.9) | 68.9 (41.9/27) |
|  | 160 - 2.3 $\times$ 10$^{-3}$ $\times$ Toughness (Calculation Value) | Acceptable (61) | Acceptable (67) | Acceptable (55) | Acceptable (0) |
|  | Value of Toughness $\times$ Average Number of Pores (kMPa% /$\mu$m$^3$) | 3057 | 5790 | 5313 | 3302 |
| Battery Evaluation at 35°C | Capacity Retention Rate at 15C (%) | 74.7 | 76.0 | 75.8 | 76.1 |
|  | m1 | -1.32 | -1.38 | -1.3 | -1.31 |
|  | m2 | -3.68 | -2.8 | -3.28 | -3.51 |
|  | Cross Rate (C) | 14.2 | 15.3 | 14.5 | 15.1 |
|  | m2/ml | 2.79 | 2.03 | 2.52 | 2.68 |
|  | Cross Rate/m1 | -10.8 | -11.1 | -11.2 | -11.5 |
| Insulation Properties Evaluation | Insulation Breakdown Voltage (kV) | Good | Good | Good | Standard |
| Thermal Stability Test | CCS Thermal Shrinkage after Holding at 130°C for 1 hour | Good | Good | Good | Good |
| Thermal Stability Test | CCS Thermal Shrinkage after Holding at 150°C for 1 hour | Good | Good | Excellent | Acceptable |

[Table 9]

| | | | Comp. Ex. 1 | Comp. Ex. 2 | Comp. Ex. 3 | Comp. Ex. 4 |
|---|---|---|---|---|---|---|
| Physical Properties of Membrane | | Membrane thickness ($\mu$m) | 6.9 | 7.3 | 23.3 | 25.3 |
| | | Air Permeability (sec/100cm$^3$) | 90 | 98 | 292 | 165 |
| | | Porosity (%) | 43.6 | 45.1 | 48.9 | 57.7 |
| | | Puncture Strength in terms of Membrane thickness of 10 $\mu$m (mN) | 3550 | 1549 | 2470 | 1920 |
| | | Average Tensile Strength (MPa) MD/TD | 162/191 | 59/61 | 129/112 | 75/105 |
| | | Average Tensile Elongation (%) MD/TD | 130/140 | 47.8/50.7 | 120/143 | 65/92 |
| | | Toughness (kMPa%) | 42365 | 5893 | 31511 | 14515 |
| | | BP/AP | 1.3 | 1.9 | 2.4 | 2.2 |
| | | BP-AP | 13 | 24 | 25 | 36 |
| | | Maximum Pore Diameter (nm) | 49.3 | 51.7 | 42.9 | 65.3 |
| | | Average Pore Diameter (nm) | 36.8 | 27.8 | 18.1 | 29.2 |
| | | Average Number of Pores (/$\mu$m$^3$) | 35.2 | 67.1 | 66.3 | 27.8 |
| | | Maximum Shrinkage (%) MD + TD (MD/TD) | 37.6 (15.5/22.1) | 4.8 (2.4/2.4) | 48 (24.3/23.7) | 39.4 (9.3/30.1) |
| | | $160 - 2.3 \times 10^{-3} \times$ Toughness (Calculation Value) | Unacceptable (63) | Unacceptable (146) | Unacceptable (88) | Unacceptable (127) |
| | | Value of Toughness $\times$ Average Number of Pores (kMPa% /$\mu$m$^3$) | 1491 | 395 | 2089 | 404 |
| Battery Evaluation at 35°C | | Capacity Retention Rate at 15C (%) | 75.9 | 75.1 | 64.6 | 72.9 |
| | | m1 | -1.37 | -1.76 | -1.45 | -1.37 |
| | | m2 | -2.99 | -3.86 | -5.36 | -4.01 |
| | | Cross Rate (C) | 14.9 | 15 | 12.3 | 13.9 |
| | | m2/ml | 2.18 | 2.19 | 3.70 | 2.93 |
| | | Cross Rate/m1 | -10.9 | -8.5 | -8.5 | -10.1 |
| Insulation Properties Evaluation | | Insulation Breakdown Voltage (kV) | Standard | Below Standard | Good | Below Standard |
| Thermal Stability Test | | CCS Thermal Shrinkage after Holding at 130°C for 1 hour | Good | Good | Good | Good |
| Thermal Stability Test | | CCS Thermal Shrinkage after Holding at 150°C for 1 hour | Excellent | Excellent | Good | Excellent |

[Table 10]

| | | Comp. Ex. 5 | Comp. Ex. 6 | Comp. Ex. 7 | Comp. Ex. 8 |
|---|---|---|---|---|---|
| Physical Properties of Membrane | Membrane thickness ($\mu$m) | 12.0 | 8.9 | 7.5 | 6.4 |
| | Air Permeability (sec/100cm$^3$) | 230 | 38 | 80 | 76 |
| | Porosity (%) | 39.0 | 63.7 | 52.0 | 44.9 |
| | Puncture Strength in terms of Membrane thickness of 10 $\mu$m (mN) | 2620 | 2130 | 4040 | 3380 |
| | Average Tensile Strength (MPa) MD/TD | 143/118 | 102/113 | 192/194 | 160/138 |
| | Average Tensile Elongation (%) MD/TD | 120/200 | 34.4/31.5 | 73/61 | 123/144 |
| | Toughness (kMPa%) | 41189 | 7091 | 25862 | 39438 |
| | BP/AP | 1.6 | 1.4 | 1.4 | 1.6 |
| | BP-AP | 14 | 16 | 12 | 18 |
| | Maximum Pore Diameter (nm) | 38.3 | 59.1 | 38.7 | 47.3 |
| | Average Pore Diameter (nm) | 24.1 | 43.1 | 27 | 29.8 |
| | Average Number of Pores (/$\mu$m$^3$) | 45.4 | 38.8 | 84.7 | 68.3 |
| | Maximum Shrinkage (%) MD + TD (MD/TD) | 20.2 (18.7/1.5) | 31.9 (13.6/18.3) | 47 (21/26) | 14.5 (7.4/7.1) |
| | 160 - 2.3 $\times$ 10$^{-3}$ $\times$ Toughness (Calculation Value) | Unacceptable (65) | Unacceptable (144) | Unacceptable (101) | Unacceptable (69) |
| | Value of Toughness $\times$ Average Number of Pores (kMPa%/$\mu$m$^3$) | 1870 | 275 | 2191 | 2694 |
| Battery Evaluation at 35°C | Capacity Retention Rate at 15C (%) | 64.8 | 77.7 | 76.0 | 75.4 |
| | m1 | -1.53 | -1.29 | -1.36 | -1.42 |
| | m2 | -5.23 | -2.5 | -2.88 | -3.36 |
| | Cross Rate (C) | 12.5 | 15.6 | 14.9 | 14.9 |
| | m2/ml | 3.42 | 1.94 | 2.12 | 2.37 |
| | Cross Rate/m1 | -8.2 | -12.1 | -11.0 | -10.5 |
| Insulation Properties Evaluation | Insulation Breakdown Voltage (kV) | Good | Below Standard | Good | Standard |
| Thermal Stability Test | CCS Thermal Shrinkage after Holding at 130°C for 1 hour | Good | Good | Good | Good |

(continued)

| | | Comp. Ex. 5 | Comp. Ex. 6 | Comp. Ex. 7 | Comp. Ex. 8 |
|---|---|---|---|---|---|
| Thermal Stability Test | CCS Thermal Shrinkage after Holding at 150°C for 1 hour | Excellent | Excellent | Good | Excellent |

[Table 11]

| | | Comp. Ex. 9 | Comp. Ex. 10 | Comp. Ex. 11 | Comp. Ex. 12 | Comp. Ex. 13 |
|---|---|---|---|---|---|---|
| Physical Properties of Membrane | Membrane thickness ($\mu$m) | 9.9 | 4.8 | 9.0 | 10.6 | 6.2 |
| | Air Permeability (sec/100cm$^3$) | 130 | 47 | 210 | 201 | 91 |
| | Porosity (%) | 43.7 | 51.7 | 29.0 | 43.4 | 44.6 |
| | Puncture Strength in terms of Membrane thickness of 10 $\mu$m (mN) | 4350 | 4370 | 3160 | 2815 | 5630 |
| | Average Tensile Strength (MPa) MD/TD | 255/240 | 195/152 | 152/172 | 135/139 | 253/259 |
| | Average Tensile Elongation (%) MD/TD | 150/130 | 40/60.1 | 130/140 | 139/154 | 58/70 |
| | Toughness (kMPa%) | 52074 | 16939 | 43787 | 40057 | 32804 |
| | BP/AP | 1.5 | 1.3 | 1.4 | 2.2 | 1.3 |
| | BP-AP | 16 | 11 | 21 | 27 | 9 |
| | Maximum Pore Diameter (nm) | 48.7 | 50.6 | 68.6 | 49.6 | 38.6 |
| | Average Pore Diameter (nm) | 32.3 | 39.2 | 48 | 22.9 | 29.6 |
| | Average Number of Pores (/$\mu$m$^3$) | 33.9 | 54.2 | 8.5 | 62 | 64 |
| | Maximum Shrinkage (%) MD + TD (MD/TD) | 77.3 (39.9/37.4) | 23 (9.2/13.8) | 3.2 (0/3.2) | 6.9 (3.0/3.9) | 65 (31/34) |
| | 160 - 2.3 $\times$ 10$^{-3}$ $\times$ Toughness (Calculation Value) | Unacceptable (40) | Unacceptable (121) | Unacceptable (59) | Unacceptable (68) | Unacceptable (85) |
| | Value of Toughness $\times$ Average Number of Pores (kMPa%/$\mu$m$^3$) | 1765 | 918 | 372 | 2484 | 2099 |

(continued)

| | | Comp. Ex. 9 | Comp. Ex. 10 | Comp. Ex. 11 | Comp. Ex. 12 | Comp. Ex. 13 |
|---|---|---|---|---|---|---|
| Battery Evaluation at 35°C | Capacity Retention Rate at 15C (%) | 73.6 | 76.0 | 54.3 | 68.1 | 76.5 |
| | m1 | -1.35 | -1.37 | -1.48 | -1.4 | -1.5 |
| | m2 | -3.99 | -2.7 | -6.79 | -4.74 | -3.4 |
| | Cross Rate (C) | 14 | 15.3 | 11.1 | 12.9 | 15.4 |
| | m2/m1 | 2.96 | 1.97 | 4.59 | 3.39 | 2.27 |
| | Cross Rate/m1 | -10.4 | -11.2 | -7.5 | -9.2 | -10.3 |
| Insulation Properties Evaluation | Insulation Breakdown Voltage (kV) | Standard | Below Standard | Below Standard | Standard | Good |
| Thermal Stability Test | CCS Thermal Shrinkage after Holding at 130°C for 1 hour | Good | Good | Good | Good | Good |
| Thermal Stability Test | CCS Thermal Shrinkage after Holding at 150°C for 1 hour | Acceptable | Excellent | Excellent | Excellent | Acceptable |

The coefficient m2 of the secondary deterioration region at 0°C has a correlation with a value obtained by multiplying the average number of pores by the toughness (value of the toughness × the average number of pores), and the higher the value of the toughness × the average number of pores, the smaller the absolute value of m2 (FIG. 3).

That is, it can be seen that the degradation in the secondary degradation region is suppressed (FIG. 2).

In addition, as shown in FIG. 4, there is a correlation between the ratio m2/m1 at 0°C and the value of the toughness × the average number of pores. As shown in FIG. 2, the ratio m2/m1 generally has a correlation with the ratio of the cross rate/m1, and the smaller the ratio m2/m1 is, the higher the capacity retention rate can be maintained up to a high rate. It was found that the ratio m2/m1 at 0°C was improved and the rate characteristics at a low temperature were improved due to the increase in the value of toughness × the average number of pores.

Although the reason is not clear, it is considered that the larger the number of pores which are the number of flow paths through which ions flow, the more advantageous for the characteristics at a higher rate. Since the number of pores increases, the number of voids increases, and it is considered that the toughness cannot withstand the rapid expansion and shrinkage of the electrode during rapid charging/discharging, and the ion permeability tends to be deteriorated. It is considered that the improvement of the battery characteristics could be achieved at a high rate by keeping the toughness that can withstand the rapid expansion and shrinkage of the electrode and the number of flow paths through which ions flow at a certain number or more.

In particular, it is considered that the reason why the improvement of the battery characteristics becomes remarkable at a low temperature (0°C) is that an increase in the average number of the pores works advantageously under the condition that the ion diffusion rate is lowered. In order to obtain the value of the toughness × the average number of pores being, for example, more than 3000 kMPa%/$\mu$m$^3$, it is desirable that the relationship between the average number of pores and the toughness satisfies the formula (5).

$$\text{Average number of pores} \geq 160 - 2.3 \times 10^{-3} \times \text{Toughness} \quad \text{Formula (5)}$$

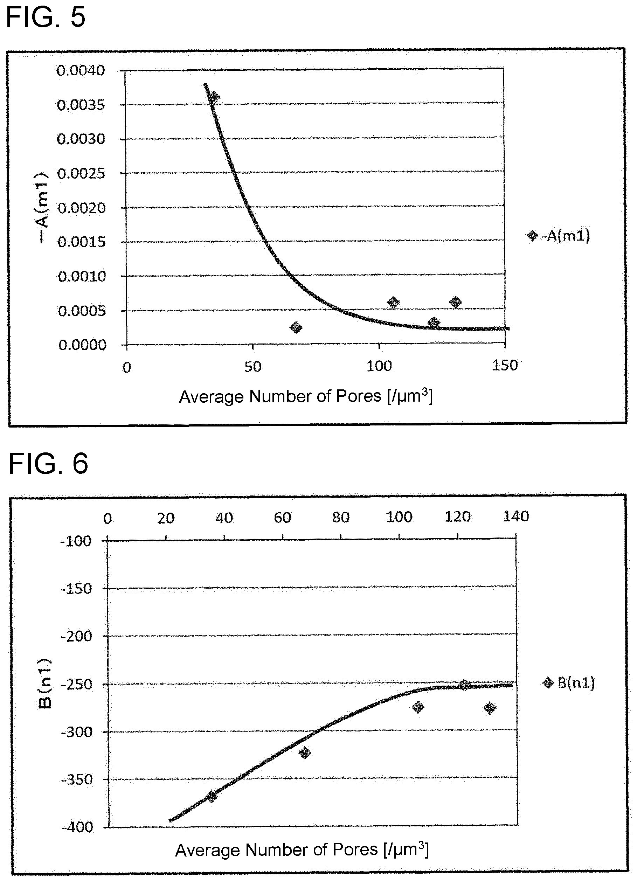

Further, the temperature dependence was examined using the formula (17). FIG. 5 shows the relationship between -A(m1) (since m1 is a negative value, "-(minus)" is added in front to convert A(m1) to positive) and the average number of pores. It was found that by increasing the average number of pores, -A, which was the frequency factor of m1, sharply decreased, and the absolute value of m1 became smaller, that is, the decrease in capacity retention rate at the time of a high rate was suppressed. In particular, it was found that when the average number of pores was 60/$\mu$m$^3$ or more, that was remarkable.

Further, as for n1 which is an intercept of an approximate expression in the primary degradation region, as shown in FIG. 6, since the temperature responsiveness (B (n1)) increases with an increase in the number of average pores (an absolute value of B (n1) becomes smaller), and n1 does not change greatly when the temperature T changes, because coefficient B (n1) is small.

That is, it was found that when the average number of pores was increased, the capacity retention rate was less likely to decrease with a decrease in the temperature. It is presumed that ions are likely to flow due to an increase in the average number of pores, and are less likely to be affected by a decrease in the temperature.

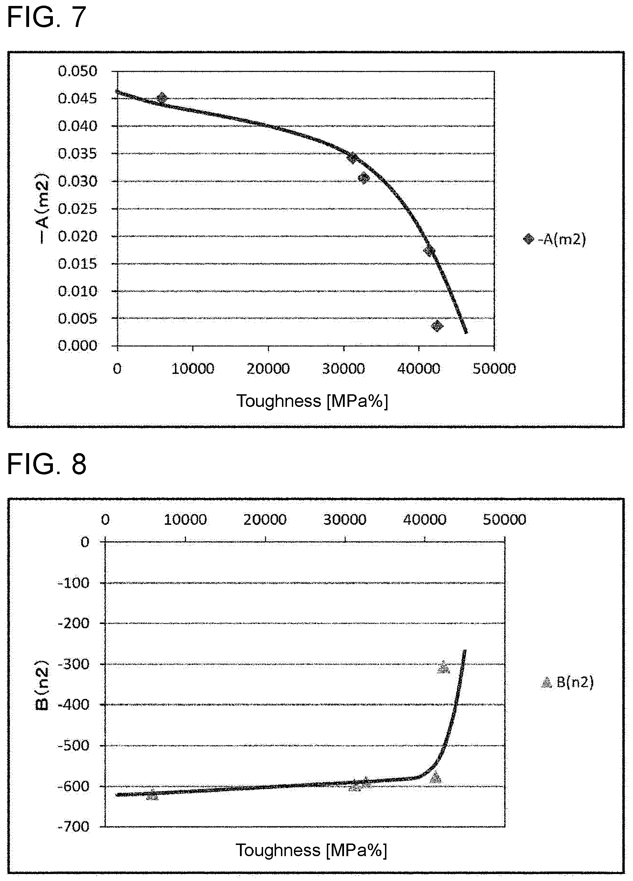

On the other hand, the toughness showed a strong correlation with the secondary degradation region (FIG. 7 and FIG. 8). It was found that -A(m2) (since m2 is a negative value, "-(minus)" is added in front to convert -A(m2) to positive), which is a frequency factor of the slope m2 of the capacity retention rate approximation curve in the secondary deterioration region, is significantly reduced when the toughness exceeds 30,000 (MPa%). This indicates that the slope in the secondary degradation region is small and the battery performance is less likely to deteriorate at a high rate.

In addition, since when the toughness is 40,000 (MPa%) or more, B (n2), which is a measure of temperature responsiveness, sharply increases (as a value, approaches 0, and becomes smaller as an absolute value), n2, which is an intercept in the secondary degradation region obtained by the formula (17), is less likely to be affected by the temperature. This indicates that toughness has a great influence in the region where the electrode is in the final stage of deformation during charging/discharging.

From these results, it has become clear that the average number of pores and the toughness greatly affect the battery characteristics at the time of high-speed charging/discharging and improve the battery characteristics.

As a conventional method for improving the rate characteristics, when the method of increasing the porosity (Comparative Examples 4, 6, 7, and 10) or increasing the pore diameter (Comparative Examples 2 and 11) was used, it was clarified that the pores were likely to be deformed, and in particular, the ion permeability was deteriorated at a low temperature. At the same time, the voltage endurance was lowered, and the battery productivity tended to decrease.

There is also a method of increasing the strength to suppress the deformation of the structure, but the porosity was reduced (Comparative Examples 5 and 11) or the thermal shrinkage was deteriorated (Comparative Example 9), resulting in degradation of the rate characteristics at room temperature and the decrease in safety.

As can be seen from Tables 6 to 11 in which the above results were described, the polyolefin microporous membranes of Examples had a high average number of pores and satisfied high ion permeability at the same time while having high toughness, as compared with the results shown in Comparative Examples. In addition, by having both a high average number of pores with excellent ion permeability and low melt shrinkage, a polyolefin microporous membrane having excellent ion permeability can be obtained.

By adopting such a structure, it was possible to find a polyolefin microporous membrane capable of improving battery characteristics at a high output for rapid charging/discharging, in particular, at a low temperature.

Although the present invention has been described in detail with reference to specific embodiments, it will be apparent to those skilled in the art that various changes and modifications can be made without departing from the spirit and scope of the present invention. The present application is based on Japanese Patent Application No. 2019-068112 filed on March 29, 2019, and the content of which is incorporated herein by reference.

**Claims**

1. A polyolefin microporous membrane, wherein a relationship represented by the following formula (5) is satisfied between an average number of pores ($/\mu m^3$) calculated by the following formula (1) and a toughness (MPa%) calculated by the following formula (4):

$$\text{Average number of pores} = 4 \times (\varepsilon/100)/(\pi \times d^2 \times \tau \times L) \quad \text{Formula (1)}$$

[$\varepsilon$: porosity (%), d: average pore diameter ($\mu m$), $\tau$: tortuosity calculated by the following formula (2), L: membrane thickness ($\mu m$)]

$$\text{Tortuosity } \tau = (d \times (\varepsilon/100) \times 500/(3 \times L \times 101300 \times R_{gas}))^{0.5} \quad \text{Formula (2)}$$

[d: average pore diameter ($\mu m$), L: membrane thickness ($\mu m$), $R_{gas}$: gas permeation constant ($m^3/(m^2 \cdot sec \cdot Pa)$) calculated by the following formula (3)]

$$\text{Gas permeation constant } R_{gas} = 0.0001/(G \times (6.424 \times 10^{-4}) \times (0.01276 \times 101325)) \quad \text{Formula (3)}$$

[G: Air permeability ($sec/100cm^3$)]

$$\text{Toughness} = \text{Tensile strength (MPa) in MD direction} \times \text{Tensile elongation (\%) in MD direction} + \text{Tensile strength (MPa) in TD direction} \times \text{Tensile elongation (\%) in TD direction} \quad \text{Formula (4)}$$

$$\text{Average number of pores} \geq 160 - 2.3 \times 10^{-3} \times \text{Toughness} \quad \text{Formula (5)}.$$

2. The polyolefin microporous membrane according to claim 1, wherein the average pore number is $60/\mu m^3$ or more, and the toughness is 40,000 MPa% or more.

3. The polyolefin microporous membrane according to claim 1 or 2, wherein a maximum shrinkage calculated by the following formula (6) is 60% or less:

$$\text{Maximum shrinkage} = (HSMD + HSTD) \quad \text{Formula (6)}$$

[HSMD: maximum shrinkage (%) in MD direction measured by thermomechanical analysis, HSTD: maximum shrinkage (%) in TD direction measured by thermomechanical analysis].

4. The polyolefin microporous membrane according to any one of claims 1 to 3, wherein a puncture strength in terms of a membrane thickness of 10 $\mu$m is 3500 mN or more.

5. A battery separator, using the polyolefin microporous membrane according to any one of claims 1 to 4.

6. A secondary battery, using the battery separator according to claim 5.

FIG. 1

FIG. 2

FIG. 3

FIG. 4

## FIG. 5

## FIG. 6

## FIG. 7

## FIG. 8

**INTERNATIONAL SEARCH REPORT**

| International application No. |
| --- |
| PCT/JP2020/014356 |

A. CLASSIFICATION OF SUBJECT MATTER
Int.Cl. C08J9/00(2006.01)i, C08J9/26(2006.01)i, C08J9/28(2006.01)i,
H01M2/16(2006.01)i
FI: C08J9/00ACES, H01M2/16P, C08J9/26, C08J9/28
According to International Patent Classification (IPC) or to both national classification and IPC

B. FIELDS SEARCHED

Minimum documentation searched (classification system followed by classification symbols)
Int.Cl. C08J9/00-9/42, H01M2/14-2/18, B29C55/00-55/30, 61/00-61/10,
H01G9/02-9/035, H01G11/00-11/86

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2018/164056 A1 (TORAY INDUSTRIES, INC.) 13.09.2018 (2018-09-13), claims 1-7, paragraphs [0053], [0058]-[0061], [0064]-[0066], [0089], [0091], [0092] | 1-6 |
| A | WO 2018/216819 A1 (ASAHI KASEI CORPORATION) 29.11.2018 (2018-11-29), claims 1, 9-10, paragraphs [0001], [0026], [0039]-[0043], [0046]-[0051], [0098]-[0102], [0107] | 1-6 |
| A | WO 2016/024548 A1 (TORAY BATTERY SEPARATOR FILM CO., LTD.) 18.02.2016 (2016-02-18), claims 1, 4, paragraphs [0001], [0026]-[0028], [0047]-[0055], [0075]-[0085], [0092] | 1-6 |
| A | JP 2008-214426 A (ASAHI KASEI CHEMICALS CORPORATION) 18.09.2008 (2008-09-18), claims 1, 4, 6, paragraphs [0001], [0011], [0012], [0022], [0032], [0036] | 1-6 |

☒ Further documents are listed in the continuation of Box C. ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12.06.2020 | 23.06.2020 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/014356

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-322988 A (NITTO DENKO CORPORATION) 26.11.1999 (1999-11-26), claims 1, 2, 5, paragraphs [0001], [0010], [0014]-[0017], [0028], [0040]-[0047], [0055], [0056] | 1-6 |

Form PCT/ISA/210 (second sheet) (January 2015)

INTERNATIONAL SEARCH REPORT
Information on patent family members

| International application No. |
|---|
| PCT/JP2020/014356 |

```
WO 2018/164056 A1  13.09.2018    EP 3594278 A1
                                 claims 1-7, paragraphs [0055],
                                 [0060]-[0063], [0066]-[0068],
                                 [0093], tables 1, 2
                                 CN 110114397 A
                                 KR 10-2019-0124199 A

WO 2018/216819 A1  29.11.2018    KR 10-2019-0126144 A
                                 CN 110621731 A

WO 2016/024548 A1  18.02.2016    US 2017/0263906 A1
                                 claims 1-4, paragraphs [0001],
                                 [0028]-[0031], [0049]-[0057],
                                 [0096]-[0111], tables 1, 2
                                 EP 3181622 A1
                                 CN 106574070 A
                                 KR 10-2017-0041195 A

JP 2008-214426 A   18.09.2008    (Family: none)

JP 11-322988 A     26.11.1999    (Family: none)
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017140840 A
- JP 2015159126 A
- JP 2003231772 A
- JP 2012048987 A
- JP 2018147885 A
- WO 1997023554 A
- JP 2132327 A
- JP 3347835 B

- JP H06104736 B
- JP 3347854 B
- JP 2002256099 A
- JP 2007106992 A
- WO 2000020493 A
- WO 2005054350 A
- JP 2019068112 A